(19) Europäisches Patentamt
European Patent Office
Office européen des brevets

(11) **EP 4 611 403 A1**

(12) **EUROPEAN PATENT APPLICATION**
published in accordance with Art. 153(4) EPC

(43) Date of publication:
**03.09.2025 Bulletin 2025/36**

(21) Application number: **23884964.0**

(22) Date of filing: **01.11.2023**

(51) International Patent Classification (IPC):
**H04W 4/02** (2018.01)          **H04W 64/00** (2009.01)

(52) Cooperative Patent Classification (CPC):
**H04W 4/02; H04W 24/02; H04W 24/08;
H04W 64/00**

(86) International application number:
**PCT/CN2023/128943**

(87) International publication number:
**WO 2024/094036 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.11.2022 CN 202211358886**

(71) Applicant: **Huawei Technologies Co., Ltd.
Shenzhen, Guangdong 518129 (CN)**

(72) Inventors:
• **TIAN, Yang
Shenzhen, Guangdong 518129 (CN)**

• **LI, Yuan
Shenzhen, Guangdong 518129 (CN)**
• **CHAI, Xiaomeng
Shenzhen, Guangdong 518129 (CN)**
• **SUN, Yan
Shenzhen, Guangdong 518129 (CN)**
• **PANG, Jiyong
Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND COMMUNICATION APPARATUS**

(57) This application provides a communication method and a communication apparatus, used in a scenario in which AI is combined with a wireless network, and in particular, in a scenario in which an AI model used for positioning is combined with a wireless network. The method includes: A network element obtains a measurement result of a first parameter based on a channel measurement result, and determines, based on a correspondence between the first parameter and an AI model, a specific AI model corresponding to the current measurement result of the first parameter. The AI model corresponding to the measurement result of the first parameter is compared with an AI model currently used for positioning, to determine whether to switch or update the AI model used for positioning. A change of a channel environment affects positioning precision. The measurement result of the first parameter is obtained based on the channel measurement result, and the measurement result of the first parameter can reflect a current channel environment. In this way, determining, based on the measurement result of the first parameter, whether to switch or update the AI model can implement switching or updating of the AI model in a timely manner based on the change of the channel environment, thereby improving positioning precision of the AI model.

800

A first network element receives a reference signal — 810

The first network element performs channel measurement based on the reference signal to obtain a channel measurement result, where the channel measurement result or assisted positioning information based on the channel measurement result is an input of an AI model used for positioning, a measurement result of a first parameter and a correspondence are used to determine whether to switch or update the AI model, and the measurement result of the first parameter is obtained based on the channel measurement result — 820

FIG. 8

**Description**

This application claims priority to Chinese Patent Application No. 202211358886.8, filed with the China National Intellectual Property Administration on November 1, 2022 and entitled "COMMUNICATION METHOD AND COMMUNICATION APPARATUS", which is incorporated herein by reference in its entirety.

**TECHNICAL FIELD**

This application relates to the field of communication technologies, and more specifically, to a communication method and a communication apparatus.

**BACKGROUND**

In modern society, location information of people and objects becomes increasingly important. Positioning devices and technologies are used in fields such as navigation and aviation, plotting and disaster relief, military defense, vehicle navigation, logistics tracking, and traffic management. With development of mobile communication, wireless cellular network-based positioning technologies are widely applied. In these positioning technologies, a feature parameter between a terminal and a network device is detected, to obtain relative location or angle information between the terminal and the network device, so as to estimate a location of the terminal. An artificial intelligence (artificial intelligent, AI) model can be used in the positioning technology. Therefore, how to ensure positioning precision of an AI model as much as possible is a problem worth considering.

**SUMMARY**

This application provides a communication method and a communication apparatus, to determine, based on a channel measurement result, whether to switch or update an AI model used for positioning, to improve positioning precision of the AI model.

According to a first aspect, a communication method is provided. The method may be performed by a network element. The first network element is used as an example for description below.

The method may include: The first network element receives a reference signal; and the first network element performs channel measurement based on the reference signal to obtain a channel measurement result, where the channel measurement result or assisted positioning information based on the channel measurement result is an input of an artificial intelligence AI model used for positioning, a measurement result of a first parameter and a correspondence are used to determine whether to switch or update the AI model, the measurement result of the first parameter is obtained based on the channel measurement result, and the correspondence includes a correspondence between an AI model used for positioning and a value of the first parameter.

Optionally, the first network element is a terminal device; or a component, for example, a chip or a circuit, of a terminal device, and the reference signal is a downlink reference signal.

Optionally, the first network element is a network device or a positioning device; or a component, for example, a chip or a circuit, of a network device or a positioning device, and the reference signal is an uplink reference signal.

According to the foregoing technical solution, the network element may determine, based on an input feature of the AI model, whether the AI model needs to be switched or updated. The AI model may be an AI model used for positioning. Specifically, assuming that the input of the AI model is the channel measurement result, the measurement result of the first parameter may be obtained based on the channel measurement result, and there is a correspondence between an AI model and a value of the first parameter. In this way, the network element may determine, based on the measurement result of the first parameter and the correspondence, a specific AI model corresponding to the measurement result of the first parameter, and determine, by comparing the specific AI model with the current AI model, whether the AI model needs to be switched or updated. It is considered that a change of a channel environment may affect positioning precision. For example, the change of the channel environment may cause deterioration of positioning performance when a single AI model is used. Because the measurement result of the first parameter is obtained based on the channel measurement result, the measurement result of the first parameter can reflect a current channel environment. In this way, determining, based on the measurement result of the first parameter, whether to switch or update the AI model can implement switching or updating in a timely manner based on the change of the channel environment, thereby improving positioning precision of the AI model.

With reference to the first aspect, in some implementations of the first aspect, the method further includes: The first network element receives first indication information and/or the correspondence, where the first indication information indicates that the first parameter is used to determine whether to switch or update the AI model used for positioning.

With reference to the first aspect, in some implementations of the first aspect, the method further includes: The first network element determines, based on the measurement result of the first parameter and the correspondence, whether to switch or update the AI model.

According to the foregoing technical solution, the first network element may determine, based on the measurement result of the first parameter and the correspondence, whether to switch or update the AI model. In this way, the first network element may monitor a channel environment status by using the channel measurement result, and determine, in a timely manner based on the channel environment status, whether to switch or update the AI model.

With reference to the first aspect, in some implementations of the first aspect, that the first network element determines, based on the measurement result of the first parameter and the correspondence, whether to switch or update the AI model includes: The first network element determines, based on the measurement result of the first parameter and the correspondence, that a first-type AI model used for positioning is to be switched or updated from a first AI model to a second AI model, where the channel measurement result is an input of the first-type AI model used for positioning, and the correspondence includes a correspondence between the first-type AI model used for positioning and a value of the first parameter; and the method further includes: The first network element sends request information, where the request information is used to request the second AI model; the first network element receives a response to the request information, where the response to the request information includes information about the second AI model; and the first network element performs positioning by using the second AI model.

For example, that the request information is used to request the second AI model includes: The request information is used to request to update the AI model. An updated AI model is the second AI model.

For example, the information about the second AI model includes information that can identify the second AI model or that can be used to obtain the second AI model. For example, the information about the second AI model includes an identifier of the second AI model.

According to the foregoing technical solution, when determining to switch or update the AI model, the first network element may request a switched AI model or an updated AI model from another network element (for example, a network element that stores and/or trains the AI model). In this way, the switched or updated AI model may be used to perform positioning.

With reference to the first aspect, in some implementations of the first aspect, that the first network element determines, based on the measurement result of the first parameter and the correspondence, whether to switch or update the AI model includes: The first network element determines, based on the measurement result of the first parameter and the correspondence, that a second-type AI model used for positioning is to be switched or updated from a third AI model to a fourth AI model, where the channel measurement result is an input of a first-type AI model used for positioning, the assisted positioning information is an output of the first-type AI model, the first-type AI model is switched or updated from a first AI model corresponding to the third AI model to a second AI model corresponding to the fourth AI model, the output of the first-type AI model used for positioning is an input of the second-type AI model used for positioning, and the correspondence includes a correspondence between the second-type AI model used for positioning and a value of the first parameter; and the first network element sends second indication information, where the second indication information indicates that the second-type AI model used for positioning is to be switched or updated from the third AI model to the fourth AI model.

According to the foregoing technical solution, when determining that an AI model configured in another network element is to be switched or updated, the first network element may send the indication information to the another network element, so that the another network element can switch or update the AI model in a timely manner.

With reference to the first aspect, in some implementations of the first aspect, the method further includes: The first network element performs positioning by using a fifth AI model, where the fifth AI model is an AI model that matches the fourth AI model.

According to the foregoing technical solution, when the AI model configured in the another network element is switched or updated, for example, the AI model is switched or updated to the fourth AI model, the first network element may perform positioning by using an AI model that matches the fourth AI model. In this way, positioning can be performed jointly by using matched AI models.

With reference to the first aspect, in some implementations of the first aspect, the method further includes: The first network element sends the measurement result of the first parameter.

According to the foregoing technical solution, the first network element may send the measurement result of the first parameter to another network element. In this way, the another network element may determine, based on the measurement result of the first parameter and the correspondence, whether the AI model needs to be switched or updated.

With reference to the first aspect, in some implementations of the first aspect, that the first network element sends the measurement result of the first parameter includes: When the measurement result of the first parameter meets a specified condition, the first network element sends the measurement result of the first parameter.

For example, the specified condition may be preset, or may be configured.

With reference to the first aspect, in some implementations of the first aspect, the method further includes: The first network element receives third indication information, where the third indication information indicates that a first-type AI model used for positioning is to be switched or updated from a first AI model to a second AI model; and the first network element performs positioning by using the second AI model.

With reference to the first aspect, in some implementations of the first aspect, the third indication information includes information about the second AI model.

For example, that the third indication information indicates that a first-type AI model used for positioning is to be switched or updated from a first AI model to a second AI model includes: indicating, by using including the information about the second AI model, that the first-type AI model used for positioning is to be switched or updated from the first AI model to the second AI model.

For example, the information about the second AI model includes information that can identify the second AI model or that can be used to obtain the second AI model. For example, the information about the second AI model includes an identifier of the second AI model and/or all or some neural network parameters of the second AI model. The neural network parameter may include at least one of the following: a quantity of layers of a neural network, a width of the neural network, a weight of a neuron, or all or some parameters in an activation function of the neuron.

With reference to the first aspect, in some implementations of the first aspect, the method further includes: The first network element receives fourth indication information, where the fourth indication information indicates that a second-type AI model used for positioning is to be switched or updated from a third AI model to a fourth AI model.

For example, that the fourth indication information indicates that a second-type AI model used for positioning is to be switched or updated from a third AI model to a fourth AI model may be replaced with that the fourth indication information indicates that the second-type AI model used for positioning is switched or updated.

Optionally, the fourth indication information is used to trigger the first network element to perform positioning by using a fifth AI model, where the fifth AI model is an AI model that matches the fourth AI model; or the fourth indication information is used to trigger the first network element to perform whether to switch or update a first-type AI model used for positioning.

Optionally, the method further includes: In response to the fourth indication information, the first network element performs positioning by using the fifth AI model, where the fifth AI model is an AI model that matches the fourth AI model.

According to the foregoing technical solution, the first network element may learn that the second-type AI model is switched or updated. In addition, optionally, if an AI model configured in another network element is switched or updated, for example, the AI model is switched or updated to the fourth AI model, the first network element may determine, based on the measurement result of the first parameter, whether the first-type AI model used for positioning needs to be switched or updated. Alternatively, if an AI model configured in another network element is switched or updated, for example, the AI model is switched or updated to the fourth AI model, the first network element may perform positioning by using an AI model that matches the fourth AI model. In this way, positioning can be performed jointly by using matched AI models.

With reference to the first aspect, in some implementations of the first aspect, the first parameter includes at least one of the following: a timing error group, an inter-site synchronization error, a delay spread, a quantity of paths whose energy is greater than k times energy of a first path in a channel impulse response, an average power of a plurality of sampling points, a line-of-sight probability, a signal to interference plus noise ratio, a reference signal received power, a Rician factor, a Doppler frequency, a Doppler shift, or a moving speed of the first network element, where k is a number greater than 0.

For example, k is a number greater than 0 and less than 1 or equal to 1.

With reference to the first aspect, in some implementations of the first aspect, the first-type AI model used for positioning is an AI model used for positioning that is configured in the first network element.

With reference to the first aspect, in some implementations of the first aspect, the second-type AI model used for positioning is an AI model used for positioning that is configured in the second network element.

With reference to the first aspect, in some implementations of the first aspect, the measurement result of the first parameter is obtained by the first network element by performing channel measurement on reference signals received at at least two moments.

According to the foregoing technical solution, the measurement result of the first parameter may be obtained by the first network element by performing channel measurement on the reference signals received at the at least two moments. In this way, power consumption caused by frequent measurement can be reduced, and an error caused by one-time inaccurate measurement can further be reduced.

According to a second aspect, a communication method is provided. The method may be performed by a network element. The second network element is used as an example for description below.

The method may include: A second network element receives a measurement result of a first parameter, where the measurement result of the first parameter is based on a channel measurement result, and the channel measurement result or assisted positioning information based on the channel measurement result is an input of an artificial intelligence AI model used for positioning; and the second network element determines, based on the measurement result of the first parameter and a correspondence, whether to switch or update the AI model, where the correspondence includes a correspondence between an AI model used for positioning and a value of the first parameter.

Optionally, the second network element is a network device, a core network device, a positioning device, or a server or a cloud device in an OTT system; or a component, for example, a chip or a circuit, of a network device, a core network device, a positioning device, or a server or a cloud device in an OTT system.

Optionally, the channel measurement result is obtained based on measurement of a reference signal. Optionally, the reference signal includes an uplink reference signal or a downlink reference signal.

According to the foregoing technical solution, there is the correspondence between the AI model and the value of the first parameter. In this way, after obtaining the measurement result of the first parameter, the network element may determine, based on the measurement result of the first parameter and the correspondence, a specific AI model corresponding to the measurement result of the first parameter, and compare the specific AI model with a current AI model, to determine whether the AI model needs to be switched or updated. It is considered that a change of a channel environment may affect positioning precision. For example, the change of the channel environment may cause deterioration of positioning performance when a single AI model is used. Because the measurement result of the first parameter is obtained based on the channel measurement result, the measurement result of the first parameter can reflect a current channel environment. In this way, determining, based on the measurement result of the first parameter, whether to switch or update the AI model can implement switching or updating of the AI model in a timely manner based on the change of the channel environment, thereby improving positioning precision of the AI model.

With reference to the second aspect, in some implementations of the second aspect, that the second network element determines, based on the measurement result of the first parameter and a correspondence, whether to switch or update the AI model includes: The second network element determines, based on the measurement result of the first parameter and the correspondence, that a first-type AI model used for positioning is to be switched or updated from a first AI model to a second AI model, where the channel measurement result is an input of the first-type AI model used for positioning, and the correspondence includes a correspondence between the first-type AI model used for positioning and a value of the first parameter; and the method further includes: The second network element sends third indication information, where the third indication information indicates that the first-type AI model used for positioning is to be switched or updated from the first AI model to the second AI model.

With reference to the second aspect, in some implementations of the second aspect, the third indication information includes information about the second AI model.

With reference to the second aspect, in some implementations of the second aspect, that the second network element determines, based on the measurement result of the first parameter and a correspondence, whether to switch or update the AI model includes: The second network element determines, based on the measurement result of the first parameter and the correspondence, that a second-type AI model used for positioning is to be switched or updated from a third AI model to a fourth AI model, where the channel measurement result is an input of a first-type AI model used for positioning, the assisted positioning information is an output of the first-type AI model, the first-type AI model is switched or updated from a first AI model corresponding to the third AI model to a second AI model corresponding to the fourth AI model, the output of the first-type AI model used for positioning is an input of the second-type AI model used for positioning, and the correspondence includes a correspondence between the second-type AI model used for positioning and a value of the first parameter; and the second network element performs positioning by using the fourth AI model.

With reference to the second aspect, in some implementations of the second aspect, the method further includes: The second network element sends fourth indication information, where the fourth indication information indicates that the second-type AI model used for positioning is to be switched or updated from the third AI model to the fourth AI model.

With reference to the second aspect, in some implementations of the second aspect, the method further includes: The second network element sends first indication information, where the first indication information indicates that the first parameter is used to determine whether to switch or update the AI model used for positioning.

With reference to the second aspect, in some implementations of the second aspect, the first parameter includes at least one of the following: a timing error group, an inter-site synchronization error, a delay spread, a quantity of paths whose energy is greater than k times energy of a first path in a channel impulse response, an average power of a plurality of sampling points, a line-of-sight probability, a signal to interference plus noise ratio, a reference signal received power, a Rician factor, a Doppler frequency, a Doppler shift, or a moving speed of a first network element, where k is a number greater than 0.

For example, k is a number greater than 0 and less than 1 or equal to 1.

With reference to the second aspect, in some implementations of the second aspect, the first-type AI model used for positioning is an AI model used for positioning that is configured in the first network element.

With reference to the second aspect, in some implementations of the second aspect, the second-type AI model used for positioning is an AI model used for positioning that is configured in the second network element.

With reference to the second aspect, in some implementations of the second aspect, the measurement result of the first parameter is obtained by performing measurement by at least one first network element at at least one moment.

For beneficial effects of the second aspect and the possible designs, refer to related descriptions of the first aspect. Details are not described herein again.

According to a third aspect, a communication method is provided. The method may be performed by a network element. The second network element is used as an example for description below.

The method may include: A second network element sends first indication information and/or a correspondence, where the correspondence includes a correspondence between an artificial intelligence AI model used for positioning and a value of a first parameter, a measurement result of the first parameter is based on a channel measurement result, the channel measurement result or assisted positioning information based on the channel measurement result is an input of the AI model, and the first indication information indicates that the first parameter is used to determine whether to switch or update the AI model used for positioning.

Optionally, the second network element is a network device, a core network device, a positioning device, or a server or a cloud device in an OTT system; or a component, for example, a chip or a circuit, of a network device, a core network device, a positioning device, or a server or a cloud device in an OTT system.

Optionally, the channel measurement result is obtained based on measurement of a reference signal. Optionally, the reference signal includes an uplink reference signal or a downlink reference signal.

According to the foregoing technical solution, the second network element may provide, for another network element, the correspondence between the AI model used for positioning and the value of the first parameter. In this way, the another network element may determine, based on the correspondence, whether to switch or update the AI model. The correspondence between the AI model used for positioning and the value of the first parameter is established, so that the AI model can be switched or updated in a timely manner based on a change of a channel environment, and positioning precision of the AI model can be improved.

With reference to the third aspect, in some implementations of the third aspect, the method further includes: The second network element receives request information, where the request information is used to request a second AI model; and the second network element sends a response to the request information, where the response to the request information includes information about the second AI model.

For example, that the request information is used to request the second AI model includes: The request information is used to request to update the AI model. An updated AI model is the second AI model.

For example, the information about the second AI model includes information that can identify the second AI model or that can be used to obtain the second AI model. For example, the information about the second AI model includes an identifier of the second AI model.

With reference to the third aspect, in some implementations of the third aspect, the method further includes: The second network element receives second indication information, where the second indication information indicates that a second-type AI model used for positioning is to be switched or updated from a third AI model to a fourth AI model, the channel measurement result is an input of a first-type AI model used for positioning, the assisted positioning information is an output of the first-type AI model, the first-type AI model is switched or updated from a first AI model corresponding to the third AI model to a second AI model corresponding to the fourth AI model, the output of the first-type AI model used for positioning is an input of the second-type AI model used for positioning, and the correspondence includes a correspondence between the second-type AI model used for positioning and a value of the first parameter; and the second network element performs, based on the second indication information, positioning by using the fourth AI model.

With reference to the third aspect, in some implementations of the third aspect, the second-type AI model used for positioning is an AI model used for positioning that is configured in the second network element.

With reference to the third aspect, in some implementations of the third aspect, the first parameter includes at least one of the following: a timing error group, an inter-site synchronization error, a delay spread, a quantity of paths whose energy is greater than k times energy of a first path in a channel impulse response, an average power of a plurality of sampling points, a line-of-sight probability, a signal to interference plus noise ratio, a reference signal received power, a Rician factor, a Doppler frequency, a Doppler shift, or a moving speed of a first network element, where k is a number greater than 0. For example, k is a number greater than 0 and less than 1 or equal to 1.

For beneficial effects of the third aspect and the possible designs, refer to related descriptions of the first aspect. Details are not described herein again.

According to a fourth aspect, a communication method is provided. The method may be performed by a network element. The second network element is used as an example for description below.

The method may include: A second network element receives a measurement result of a second parameter from a first network element, where the measurement result of the second parameter includes a measurement result obtained based on an output of an artificial intelligence AI model configured in the first network element; and the second network element determines, based on the measurement result of the second parameter and a correspondence, whether an AI model used for positioning that is configured in the second network element is to be switched or updated, where the correspondence includes a correspondence between an AI model used for positioning and a value of the second parameter.

Optionally, the second network element is a network device, a core network device, a positioning device, or a server or a cloud device in an OTT system; or a component, for example, a chip or a circuit, of a network device, a core network device, a positioning device, or a server or a cloud device in an OTT system.

Optionally, the channel measurement result is obtained based on measurement of a reference signal. Optionally, the reference signal includes an uplink reference signal or a downlink reference signal.

For example, the AI model configured in the first network element is an AI model used for positioning.

For example, the measurement result of the second parameter includes the measurement result obtained based on the output of the AI model configured in the first network element, and includes any one of the following: the measurement result of the second parameter is the output of the AI model configured in the first network element, the measurement result of the second parameter is a measurement result obtained through calculation based on the output of the AI model configured in the first network element, the measurement result of the second parameter is the output of the AI model configured in the first network element and another measurement result, or the measurement result of the second parameter is a measurement result obtained through calculation based on the output of the AI model configured in the first network element and another measurement result. The another measurement result may be obtained through calculation by the second network element, or may be provided by another network element for the second network element. This is not limited.

For example, the AI model configured in the first network element is used for assisted positioning, and the AI model configured in the second network element is used for direct positioning.

With reference to the fourth aspect, in some implementations of the fourth aspect, the second parameter includes at least one of the following: a timing error group, an inter-site synchronization error, a delay spread, a quantity of paths whose energy is greater than k times energy of a first path in a channel impulse response, an average power of a plurality of sampling points, a line-of-sight probability, a signal to interference plus noise ratio, a reference signal received power, a Rician factor, a Doppler frequency, a Doppler shift, or a moving speed of the first network element, where k is a number greater than 0.

For example, k is a number greater than 0 and less than 1 or equal to 1.

With reference to the fourth aspect, in some implementations of the fourth aspect, that the second network element determines, based on the measurement result of the second parameter and a correspondence, whether an AI model used for positioning that is configured in the second network element is to be switched or updated includes: The second network element determines, based on the measurement result of the second parameter and the correspondence, that the AI model used for positioning that is configured in the second network element is to be switched or updated from a third AI model to a fourth AI model; and the second network element sends fifth indication information, where the fifth indication information indicates that the AI model used for positioning that is configured in the second network element is to be switched or updated from the third AI model to the fourth AI model.

According to a fifth aspect, a communication method is provided. The method may be performed by a network element. The first network element is used as an example for description below.

The method may include: A first network element receives a reference signal; and the first network element performs channel measurement based on the reference signal, to obtain a channel measurement result, where the channel measurement result is an input of a first artificial intelligence AI model used for positioning; and output precision of the first AI model, a preset threshold, and a correspondence are used to determine whether to switch or update the first AI model, and the correspondence includes a correspondence between complexity of an AI model used for positioning and the AI model used for positioning.

Optionally, the first network element is a terminal device; or a component, for example, a chip or a circuit, of a terminal device, and the reference signal is a downlink reference signal.

Optionally, the first network element is a network device or a positioning device; or a component, for example, a chip or a circuit, of a network device or a positioning device, and the reference signal is an uplink reference signal.

For example, the preset threshold may indicate expected output precision. The preset threshold may be sent by another network element to the first network element, may be preconfigured, or may be predefined. This is not limited.

According to the foregoing technical solution, the network element may determine, based on the output of the AI model, whether the AI model needs to be switched or updated. The AI model may be an AI model used for positioning. Specifically, there is a correspondence between an AI model used for positioning and complexity of the AI model used for positioning. In this way, the network element may determine, based on output precision of a current AI model, whether the preset threshold is satisfied. If the preset threshold is not satisfied, the network element may further determine, based on the correspondence, a specific AI model to be switched or updated to. A higher complexity of an AI model indicates higher output precision that can be achieved by the AI model. Therefore, the correspondence between the AI model used for positioning and the complexity of the AI model used for positioning is established, so that the AI model can be adaptively switched or updated based on a change of a channel condition.

With reference to the fifth aspect, in some implementations of the fifth aspect, the first AI model is an AI model that is configured in the first network element and that is used for assisted positioning, or the first AI model is an AI model that is configured in the first network element and that is used for LOS identification.

According to the foregoing technical solution, the first AI model and another AI model may be jointly used to

perform positioning. It is considered that the output precision of the first AI model affects final positioning precision, and the output precision of the first AI model is related to complexity. For example, higher output precision of the first AI model indicates higher complexity of the first AI model, and an AI model with higher complexity is more adaptive to a complex channel environment. Therefore, whether the first AI model needs to be switched or updated is determined by monitoring the output precision of the first AI model, or the first AI model may be adaptively switched or updated in a timely manner based on a change of a channel condition, to ensure final positioning precision performance.

With reference to the fifth aspect, in some implementations of the fifth aspect, the method further includes: The first network element receives sixth indication information and/or the correspondence, where the sixth indication information indicates that the output precision of the first AI model is used to determine whether to switch or update the AI model used for positioning.

With reference to the fifth aspect, in some implementations of the fifth aspect, the method further includes: The first network element determines, based on the output precision of the first AI model, the preset threshold, and the correspondence, whether to switch or update the first AI model.

With reference to the fifth aspect, in some implementations of the fifth aspect, that the first network element determines, based on the output precision of the first AI model, the preset threshold, and the correspondence, whether to switch or update the first AI model includes: The first network element determines, based on the output precision of the first AI model, the preset threshold, and the correspondence, to switch or update the first AI model to a second AI model; and the method further includes: The first network element sends request information, where the request information is used to request the second AI model; the first network element receives a response to the request information, where the response to the request information includes information about the second AI model; and the first network element performs positioning by using the second AI model.

For example, that the request information is used to request the second AI model includes: The request information is used to request to update the AI model. An updated AI model is the second AI model.

For example, the information about the second AI model includes information that can identify the second AI model or that can be used to obtain the second AI model. For example, the information about the second AI model includes an identifier of the second AI model.

With reference to the fifth aspect, in some implementations of the fifth aspect, the method further includes: The first network element sends an output of the first AI model.

With reference to the fifth aspect, in some implementations of the fifth aspect, that the first network element sends an output of the first AI model includes: When the output of the first AI model meets a specified condition, the first network element sends the output of the first AI model.

For example, the specified condition is that the output of the first AI model is less than the preset threshold.

For example, the specified condition may be preset, or may be configured.

With reference to the fifth aspect, in some implementations of the fifth aspect, the output of the first AI model includes at least one of the following: a line-of-sight probability, a line-of-sight hard decision result, an angle, and time.

For example, the angle may be an angle of arrival (angle of arrival, AOA).

For example, the time may be a time difference of arrival (time difference of arrival, TDoA), or may be a time of arrival (time of arrival, TOA).

According to a sixth aspect, a communication method is provided. The method may be performed by a network element. The second network element is used as an example for description below.

The method may include: A second network element receives an output of a first artificial intelligence AI model used for positioning, where an input of the first AI model is a channel measurement result; and the second network element determines, based on output precision of the first AI model, a preset threshold, and a correspondence, whether to switch or update the AI model, where the correspondence includes a correspondence between complexity of an AI model used for positioning and the AI model used for positioning.

Optionally, the second network element is a network device, a core network device, a positioning device, or a server or a cloud device in an OTT system; or a component, for example, a chip or a circuit, of a network device, a core network device, a positioning device, or a server or a cloud device in an OTT system.

Optionally, the channel measurement result is obtained based on measurement of a reference signal. Optionally, the reference signal includes an uplink reference signal or a downlink reference signal.

With reference to the sixth aspect, in some implementations of the sixth aspect, the first AI model is an AI model used for positioning and/or an AI model used for assisted positioning that are/is configured in the first network element.

With reference to the sixth aspect, in some implementations of the sixth aspect, that the second network element determines, based on output precision of the first AI model, a preset threshold, and a correspondence, whether to switch or update the AI model includes: The second network element determines, based on the output precision of the first AI model, the preset threshold, and the correspondence, to switch or update the first AI model to a second AI model; and the method further includes: The second network element sends third indication information, where the third indication information indicates to switch or update the first AI model to the second AI model.

With reference to the sixth aspect, in some implementations of the sixth aspect, the third indication information includes information about the second AI model.

For example, the information about the second AI model includes information that can identify the second AI model or that can be used to obtain the second AI model. For example, the information about the second AI model includes an identifier of the second AI model.

With reference to the sixth aspect, in some implementations of the sixth aspect, the method further includes: The second network element sends sixth indication information, where the sixth indication information indicates that the output precision of the first AI model is used to determine whether to switch or update the AI model used for positioning.

With reference to the sixth aspect, in some implementations of the sixth aspect, the output of the first AI model includes at least one of the following: a line-of-sight probability, a line-of-sight hard decision result, an angle, and time.

For example, the angle may be an AOA.

For example, the time may be a TDoA, or may be a TOA.

According to a seventh aspect, a communication apparatus is provided. The apparatus is configured to perform the method provided in any one of the first aspect to the sixth aspect. Specifically, the apparatus may include a unit and/or a module configured to perform the method according to any one of the foregoing implementations of any one of the first aspect to the sixth aspect, for example, a processing unit and/or a communication unit. The communication apparatus may be a first network element, or may be a second network element.

In an implementation, the apparatus is a communication device. When the apparatus is the communication device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, a communication apparatus is provided. The apparatus includes: a memory, configured to store a program; and at least one processor, configured to execute a computer program or instructions stored in the memory, to perform the method provided in any implementation of any one of the first aspect to the sixth aspect. The communication apparatus may be a first network element, or may be a second network element.

In an implementation, the apparatus is a communication device.

In another implementation, the apparatus is a chip, a chip system, or a circuit used in a communication device.

According to a ninth aspect, this application provides a processor, configured to perform the methods provided in the foregoing aspects.

Operations such as sending and obtaining/receiving related to the processor may be understood as operations such as output and input of the processor, or sending and receiving operations performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code to be executed by a device, and the program code is used to perform the method provided in any implementation of any one of the first aspect to the sixth aspect.

According to an eleventh aspect, a computer program product including instructions is provided. When the computer program product runs on a computer, the computer is enabled to perform the method provided in any implementation of any one of the first aspect to the sixth aspect.

According to a twelfth aspect, a chip is provided. The chip includes a processor and a communication interface. The processor reads, through the communication interface, instructions stored in a memory, to perform the method provided in any implementation of any one of the first aspect to the sixth aspect.

Optionally, in an implementation, the chip further includes the memory. The memory stores a computer program or instructions. The processor is configured to execute the computer program or the instructions stored in the memory. When the computer program or the instructions is/are executed, the processor is configured to perform the method provided in any implementation of any one of the first aspect to the sixth aspect.

According to a thirteenth aspect, a communication system is provided. The communication system includes the foregoing first network element and/or second network element.

**BRIEF DESCRIPTION OF DRAWINGS**

9

FIG. 1 is a diagram of a wireless communication system 100 applicable to an embodiment of this application;

FIG. 2 is a diagram of a wireless communication system 200 applicable to an embodiment of this application;

FIG. 3 is a diagram of a structure of a neuron;

FIG. 4 is a diagram of a layer relationship of a neural network;

FIG. 5 is a diagram of TDoA positioning;

FIG. 6 is a diagram of a time-domain channel response;

FIG. 7 is a diagram of a LOS and an NLOS;

FIG. 8 is a diagram of a communication method 800 according to an embodiment of this application;

FIG. 9 is a schematic flowchart of a communication method 900 according to an embodiment of this application;

FIG. 10 is a schematic flowchart of a communication method 1000 according to another embodiment of this application;

FIG. 11 is a schematic flowchart of a communication method 1100 according to another embodiment of this application;

FIG. 12 is a schematic flowchart of a communication method 1200 according to another embodiment of this application;

FIG. 13 is a diagram of a communication method 1300 according to an embodiment of this application;

FIG. 14 is a schematic flowchart of a communication method 1400 according to another embodiment of this application;

FIG. 15 is a diagram of a communication apparatus 1500 according to an embodiment of this application;

FIG. 16 is a diagram of another communication apparatus 1600 according to an embodiment of this application; and

FIG. 17 is a diagram of a chip system 1700 according to an embodiment of this application.

## DESCRIPTION OF EMBODIMENTS

The following describes technical solutions of embodiments of this application with reference to accompanying drawings.

The technical solutions provided in this application can be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a 6th generation mobile communication system, or a converged system of a plurality of systems. The technical solutions provided in this application can be further applied to device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. In this disclosure, the network element is used as an example for description. For example, the communication system may include at least one terminal device and at least one network device. The network device may send a downlink signal to the terminal device, and/or the terminal device may send an uplink signal to the network device. It can be understood that the terminal device in this disclosure may be replaced with a first network element, the network device may be replaced with a second network element, and the terminal device and the network device perform a corresponding communication method in this disclosure.

A terminal device in embodiments of this application includes various devices having a wireless communication function, and the terminal device may be configured to connect to a person, an object, a machine, and the like. The terminal device can be widely used in various scenarios, for example, cellular communication, D2D, V2X, peer to peer (peer to peer, P2P), M2M, MTC, IoT, virtual reality (virtual reality, VR), augmented reality (augmented reality, AR), industrial control, autonomous driving, telemedicine, a smart grid, smart furniture, a smart office, a smart wearable, smart transportation, a smart city, an uncrewed aerial vehicle, a robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, a flight device (for example, an uncrewed aerial vehicle, a helicopter, a multi-helicopter, a four-helicopter, or an airplane), a ship, a remote control device, a smart home device, or an industrial device; an apparatus built in the foregoing device (for example, a communication module, a modem, or a chip in the foregoing device); or another processing device connected to a wireless modem. For ease of description, an example in which the terminal device is a terminal or a UE is used below for description.

It should be understood that, in some scenarios, the UE may alternatively serve as a base station. For example, the UE may serve as a scheduling entity that provides a sidelink signal between UEs in a V2X scenario, a D2D scenario, a P2P scenario, or the like.

In embodiments of this application, an apparatus configured to implement a function of the terminal device may be a terminal device; or may be an apparatus, for example, a chip system or a chip, that can support a terminal device in implementing the function, and the apparatus may be mounted in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, or M2M communication, a network side device in a 6G network, a device that bears a base station function in a future communication system, or the like. The base station may support networks of a same access technology or different access technologies. A specific technology used for the network device and a specific device form of the network device are not limited in embodiments of this application.

The base station may be fixed or movable. For example, a helicopter or an uncrewed aerial vehicle may be configured as a mobile base station, and one or more cells may move based on a location of the mobile base station. In another example, a helicopter or an uncrewed aerial vehicle may be configured as a device for communicating with another base station.

In embodiments of this application, an apparatus configured to implement a function of the network device may be a network device; or may be an apparatus, for example, a chip system or a chip, that can support a network device in implementing the function, and the apparatus may be mounted in the network device. In embodiments of this application, the chip system may include a chip, or may include a chip and another discrete component.

The network device and the terminal device may be deployed on land, where the deployment includes indoor or outdoor, or handheld or vehicle-mounted deployment; may be deployed on water; or may be deployed on an aerocraft, a balloon, and a satellite in air. Scenarios in which the network device and the terminal device are located are not limited in embodiment of this application. In addition, each of the terminal device and the network device may be a hardware device, a software function running on dedicated hardware, a software function running on general-purpose hardware, for example, a virtualization function instantiated on a platform (for example, a cloud platform), or an entity including a dedicated or general-purpose hardware device and a software function. Specific forms of the terminal device and the network device are not limited in this application.

A communication system applicable to embodiments of this application is first briefly described below.

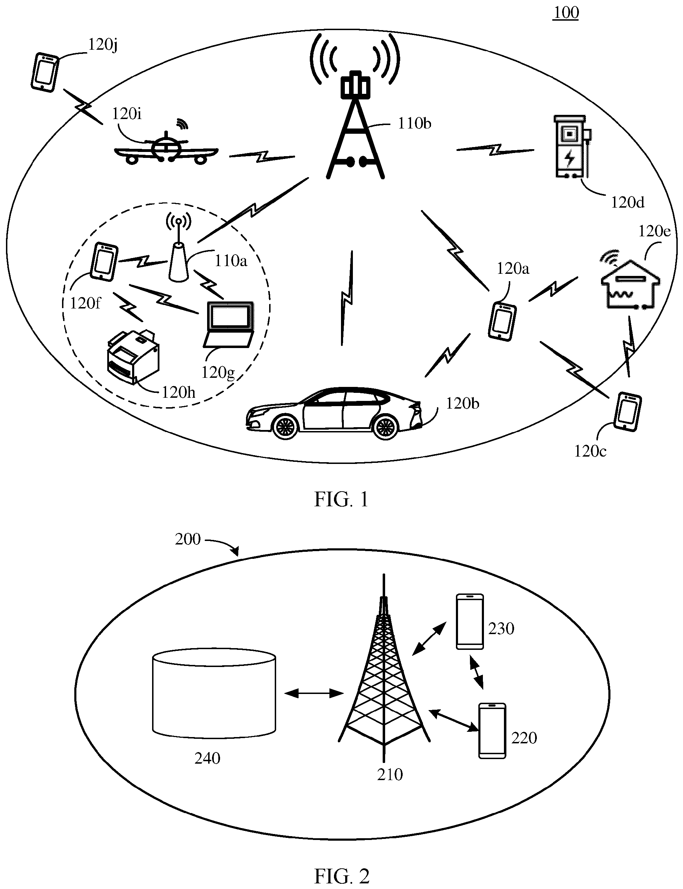

FIG. 1 is a diagram of a wireless communication system 100 applicable to an embodiment of this application. As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more terminal devices (120a to 120j, which are collectively referred to as 120) may be interconnected or connected to one or more network devices (110a and 110b, which are collectively referred to as 110) in the radio access network 100. FIG. 1 is only a diagram. The wireless communication system may further include another device, for example, may further include a core network device, a wireless relay device, and/or a wireless backhaul device, which are not shown in FIG. 1.

In an actual application, the wireless communication system may include a plurality of network devices (also referred to as access network devices), and may also include a plurality of terminal devices. This is not limited. One network device may serve one or more terminal devices. One terminal device may also access one or more network devices. A quantity of terminal devices and a quantity of network devices included in the wireless communication system are not limited in embodiments of this application.

FIG. 2 is a diagram of a wireless communication system 200 applicable to an embodiment of this application. As shown in FIG. 2, the wireless communication system 200 may include at least one network device, for example, a network device 210 shown in FIG. 2. The wireless communication system 200 may further include at least one terminal device, for example, a terminal device 220 and a terminal device 230 shown in FIG. 2. The wireless communication system 200 may further include a positioning device, for example, a positioning device 240 shown in FIG. 2. For example, the positioning device 240 is a location management function (location management function, LMF).

The positioning device and the network device may communicate with each other by using an interface message. For example, the network device 210 is a gNB, and the positioning device 240 is an LMF. The gNB and the LMF may exchange information by using an NR positioning protocol A (NR positioning protocol A, NRPPa) message. For another example, the network device 210 is an eNB, and the positioning device 240 is an LMF. The eNB and the LMF may exchange information by using an LTE positioning protocol (LTE positioning protocol, LPP) message.

The terminal device and the positioning device may directly communicate with each other, or may communicate with each other through another device. The another device may be, for example, a network device and/or a core network element. For example, as shown in FIG. 2, the terminal device 220 and the terminal device 230 may communicate with the positioning device 240 through the network device 210.

Optionally, the positioning device and the network device may be different modules of a same device, or may be different separate devices.

Optionally, the communication system further includes at least one artificial intelligence (artificial intelligence, AI) node.

Optionally, the AI node is deployed in one or more of the following: a network device, a terminal device, a core network, or a positioning device; or the AI node may be independently deployed, for example, deployed at a location other than any one of the foregoing devices. The AI node may communicate with another device in the communication system. The another device may be, for example, one or more of the following: a network device, a terminal device, a core network element, or a positioning device.

Optionally, the AI node is configured to perform an AI-related operation. For example, the AI-related operation may include, for example, one or more of a model failure test, a model performance test, a model training test, or data collection.

For example, the network device may forward, to the AI node, data that is related to an AI model and that is reported by the terminal device, and the AI node performs an AI-related operation. For another example, the network device or the terminal device may forward data related to an AI model to the AI node, and the AI node performs an AI-related operation. For another example, the AI node may send an output of an AI-related operation, for example, one or more of a trained neural network model, model evaluation, or a test result, to the network device and/or the terminal device. For example, the AI node may directly send an output of an AI-related operation to the network device and the terminal device. For another example, the AI node may send an output of an AI-related operation to the terminal device through the network device. For another example, the AI node may send an output of an AI-related operation to the network device through the terminal device.

It may be understood that a quantity of AI nodes is not limited in this application. For example, when there are a plurality of AI nodes, the plurality of AI nodes may be divided based on functions. For example, different AI nodes are responsible for different functions.

It may be further understood that the AI nodes may be independent devices, may be integrated into a same device to implement different functions, may be network elements in a hardware device, may be software functions running on dedicated hardware, or may be virtualization functions instantiated on a platform (for example, a cloud platform). Specific forms of the AI nodes are not limited in this application.

It may be further understood that FIG. 1 and FIG. 2 are simplified example diagrams for ease of understanding. The wireless communication system may further include another network device, another terminal device, or an AI node, which is not shown in FIG. 1 and FIG. 2.

For ease of understanding embodiments of this application, the following first briefly describes terms in embodiments of this application.

1. Artificial intelligence: The artificial intelligence enables machines to learn and accumulate experience, to resolve problems such as natural language understanding, image recognition, and chess playing that can be resolved by humans through experience. The artificial intelligence may be understood as intelligence represented by a machine made by a person. Generally, the artificial intelligence is a technology that presents human intelligence by using a computer program. An objective of the artificial intelligence includes understanding intelligence by building symbolic reasoning or computer programs for reasoning.

2. Machine learning (machine learning): The machine learning is an implementation of artificial intelligence. The machine learning is a method that can provide learning capabilities for machines, to enable the machines to implement functions that cannot be implemented through direct programming. In practice, the machine learning is a method for training a model by using data, and then using the model for prediction. There are many machine learning methods, such as a neural network (neural network, NN), a decision tree, and a support vector machine. A machine learning theory is mainly to design and analyze some algorithms that enable a computer to automatically learn. A machine learning algorithm is an algorithm that automatically analyzes data to obtain a rule and uses the rule to predict unknown data.

3. Neural network: The neural network is a specific embodiment of a machine learning method. The neural network is a mathematical model that imitates an animal neural network behavior feature and processes information. The idea of the neural network comes from a neuron structure of brain tissue. Each neuron may perform a weighted summation operation on input values of the neuron, and outputs, through an activation function, a result obtained through the weighted summation operation.

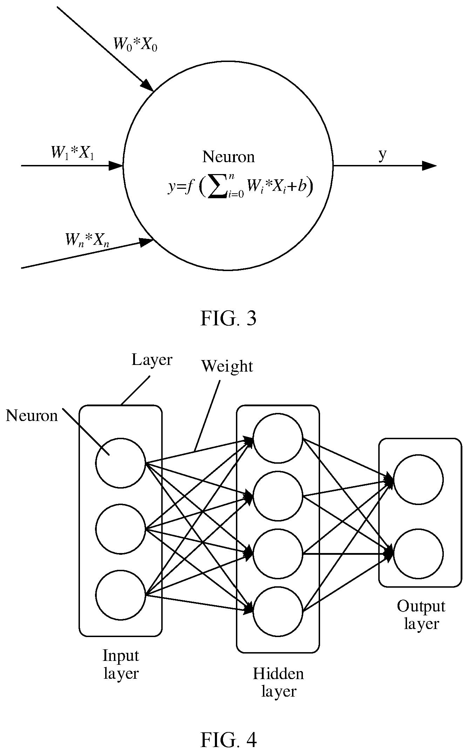

FIG. 3 is a diagram of a structure of a neuron. As shown in FIG. 3, it is assumed that inputs of a neuron are x=[x_0, x_1, ..., x_n], weights corresponding to the inputs are respectively w=[w, w_1, ..., w_n], and a bias of weighted summation is b. b may be an integer, may be a decimal, or may be various possible values such as a complex number. A form of an activation function may be diversified. In an example, assuming that an activation function of a neuron is y = $f(z)$ = max (0, z), an output of the neuron is $y = f\left(\sum_{i=0}^{i=n} w_i * x_i + b\right) = \max\left(0, \sum_{i=0}^{i=n} w_i * x_i + b\right)$ . In another example, assuming that an activation function of a neuron is y=f(z)=z, an output of the neuron is $y = f\left(\sum_{i=0}^{i=n} w_i * x_i + b\right) = \sum_{i=0}^{i=n} w_i * x_i + b$ , as shown in FIG. 3. Activation functions of different neurons in a neural network may be the same or different.

The neural network usually includes a multi-layer structure, and each layer may include one or more logical determining units. The logical determining unit may be referred to as a neuron (neuron). A depth and/or a width of the neural network are/is increased, so that an expression capability of the neural network can be improved, and more powerful information extraction and abstraction modeling capabilities can be provided for a complex system. The depth of the neural network may be understood as a quantity of layers included in the neural network, and a quantity of neurons included in each layer may be referred to as a width of the layer.

FIG. 4 is a diagram of a layer relationship of a neural network.

In a possible implementation, the neural network includes an input layer and an output layer. The input layer of the neural network performs neuron processing on a received input, and then transfers a result to the output layer. The output layer obtains an output result of the neural network.

In another possible implementation, the neural network includes an input layer, a hidden layer, and an output layer, as shown in FIG. 4. The input layer of the neural network performs neuron processing on a received input, and then transfers a result to an intermediate hidden layer. The hidden layer transfers a calculation result to the output layer or an adjacent hidden layer. Finally, the output layer obtains an output result of the neural network. One neural network may include one or more hidden layers that are sequentially connected. This is not limited.

A loss function may be defined in a training process of the neural network. The loss function is used to measure a difference between a predicted value and an actual value of a model. In the training process of the neural network, the loss function describes a gap or a difference between an output value and an ideal target value of the neural network. The training process of the neural network is a process of adjusting a neural network parameter, to make a value of the loss function be less than a threshold or satisfy a target requirement. The neural network parameter may include at least one of the following: a quantity of layers of the neural network, a width of the neural network, a weight of a neuron, or a parameter in an activation function of the neuron.

4. AI model: The AI model is an algorithm or a computer program that can implement an AI function. The AI model represents a mapping relationship between an input and an output of the model, or the AI model is a function model that maps an input of a specific dimension to an output of a specific dimension. A parameter of the function model may be obtained through machine learning training. For example, f(x) = ax2+b is a quadratic function model, which may be considered as an AI model. a and b are parameters of the AI model, and a and b may be obtained through machine learning training. For example, the AI model mentioned in the following embodiments of this application is not limited to a neural network, a linear regression model, a decision tree model, a support vector machine (support vector machine, SVM), a Bayesian network, a Q-learning model, or another machine learning (machine learning, ML) model.

An AI model design mainly includes a data collection phase (for example, collection of training data and/or inference data), a model training phase, and a model inference phase. Further, an inference result application phase may be included. In the foregoing data collection phase, a data source (data source) is used to provide a training dataset and inference data. In the model training phase, the training data (training data) provided by the data source is analyzed or trained to obtain an AI model. Obtaining the AI model through learning by using a model training node is equivalent to obtaining a mapping relationship between an input and an output of the AI model through learning based on the training data. In the model inference phase, the trained AI model in the model training phase is used to perform inference based on the inference data provided by the data source, to obtain an inference result. This phase may also be understood as follows: The inference data is input into the AI model, to obtain an output through the AI model. The output is the inference result. The inference result may indicate a configuration parameter used (executed) by an actor object, and/or an operation performed by the actor object. The inference result is released in the inference result application phase. For example, the inference result may be planned by an actor (actor) entity in a unified manner. For example, the actor entity may send the inference result to one or more actor objects (for example, a core network device, an access network device, or a terminal device) for execution. For another example, the actor entity may further feed back performance of the AI model to the data source, to facilitate subsequent AI model update training.

It may be understood that the AI model may be implemented by using a hardware circuit, or may be implemented by using software, or may be implemented by combining software and hardware. This is not limited. A non-limitative example of the software includes program code, a program, a subprogram, instructions, an instruction set, code, a code segment, a software module, an application program, a software application program, or the like.

5. Dataset: The dataset is data used for model training, model verification, or model testing in machine learning. An amount and quality of the data affect an effect of machine learning. The training data may include an input of an AI model, or include an input and a target output of the AI model. The target output is a target value output by the AI model, and may also be referred to as an output truth value, a comparison truth value, a label, or a label sample.

6. Hyperparameter: The hyperparameter is one or more of parameters such as a quantity of layers of a neural network, a quantity of neurons, an activation function, and a loss function.

7. Model training: The model training is a process of training a model parameter by selecting a proper loss function and using an optimization algorithm, to make a value of the loss function be less than a threshold, or make a value of the loss function satisfy a target requirement.

8. Model application: The model application is to use a trained model to resolve a practical problem.

9. Fingerprint: Signal multipath propagation depends on an environment. A multipath structure of a channel at each location is unique. A radio wave transmitted by a terminal is reflected and refracted to generate a multipath signal, of a specific mode, that is closely related to an ambient environment. This multipath feature may be referred to as "fingerprint" information of the location. A manner of performing positioning based on "fingerprint" information may be referred to as fingerprint positioning.

10. Time difference of arrival (time difference of arrival, TDoA): The TDoA is a method for performing positioning by using a time difference.

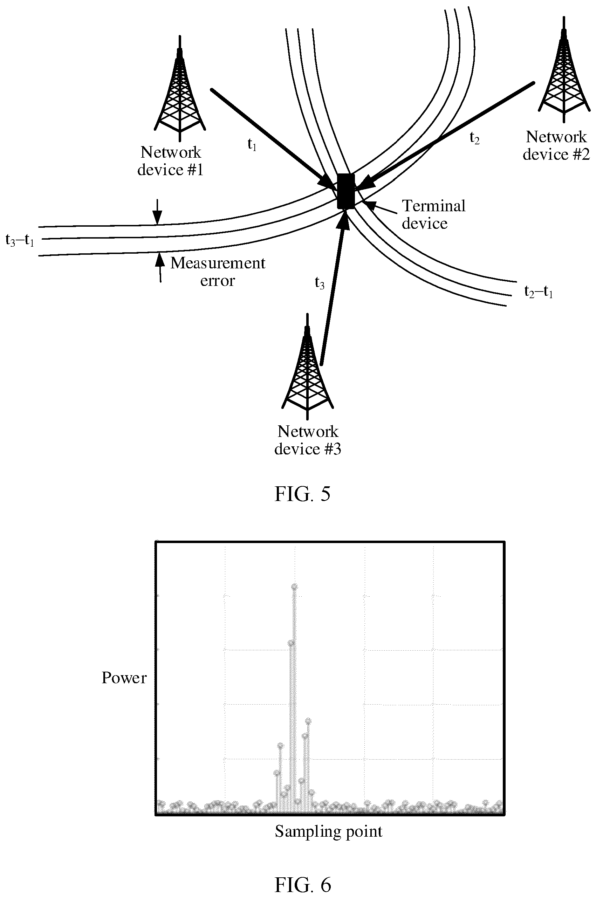

FIG. 5 is a diagram of TDoA positioning. As shown in FIG. 5, it is assumed that a distance between a network device #1 and a terminal device is d1, and transmission time during signal transmission between the network device #1 and the terminal device is t1; a distance between a network device #2 and the terminal device is d2, and transmission time during signal transmission between the network device #2 and the terminal device is t2; and a distance between a network device #3 and the terminal device is d3, and transmission time during signal transmission between the network device #3 and the terminal device is t3.

In TDoA, for example, a plurality of network devices may send reference signals, for example, positioning reference signals (positioning reference signals, PRSs) to a terminal device. The terminal device determines a location of the terminal device by measuring a time difference of arrival of the reference signals. The time difference of arrival of the reference signals may also be referred to as a reference signal time difference (reference signal time difference, RSTD). FIG. 5 is used as an example. It is assumed that a reference signal sent by the network device #1 to the terminal device is P1, a reference signal sent by the network device #2 to the terminal device is P2, and a reference signal sent by the network device #3 to the terminal device is P3. The terminal device measures a time difference of arrival between P2 and P1, that is, t2-t1. Based on t2-t1, the terminal device may infer a distance difference d2-d1 between the network device #2 and the network device #1, and obtain a curve. Each point on the curve meets the distance difference d2-d1 between the network device #2 and the network device #1. Similarly, the terminal device measures a time difference of arrival between P3 and P1, that is, t3-t1. Based on t3-t1, the terminal device may infer a distance difference d3-d1 between the network device #3 and the network device #1, and obtain another curve. Each point on the curve meets the distance difference d3-d1 between the network device #3 and the network device #1. A location of the terminal device may be determined by using an intersection point of the foregoing two curves. A mathematical model may be used to represent the following formula 1:

$$\begin{cases} \sqrt{(a_2 - a)^2 + (b_2 - b)^2} - \sqrt{(a_1 - a)^2 + (b_1 - b)^2} = d_2 - d_1 = c(t_2 - t_1) \\ \sqrt{(a_3 - a)^2 + (b_3 - b)^2} - \sqrt{(a_1 - a)^2 + (b_1 - b)^2} = d_3 - d_1 = c(t_3 - t_1) \end{cases}$$

Formula 1

$(a_i, b_i)$ represents location coordinates of a network device #i. $(a, b)$ represents location coordinates of a terminal device whose location is to be determined. For example, a represents location coordinates of the terminal device whose location is to be determined on an X-axis, and b represents location coordinates of the terminal device whose location is to be determined on a Y-axis. c represents a speed of light.

Because a particular synchronization error exists between different network devices, uncertainty also exists in a corresponding measurement value, which corresponds to an interval represented by dashed lines in FIG. 5.

The foregoing describes, with reference to FIG. 5, a method for performing positioning based on a reference signal sent by a network device to a terminal device. The method may also be referred to as a downlink TDoA (downlink TDoA, DL-TDoA) or an observed time difference of arrival (observed time difference of arrival, OTDoA). Similarly, positioning may alternatively be performed based on a reference signal sent by a terminal device to a network device, for example, a sounding reference signal (sounding reference signal, SRS). The positioning method may be referred to as an uplink TDoA (uplink TDoA, UL-TDoA).

It may be understood that, in addition to time difference measurement, positioning may be performed by measuring an angle. The angle may be an angle of arrival (angle of arrival, AOA) or an angle of departure (angle of departure, AoD). The angle of arrival represents an included angle between a direction in which a receiving end receives a signal and a reference direction. The angle of departure represents an included angle between a direction in which a transmitting end sends a signal and the reference direction. The reference direction may be a direction determined based on a location and/or a shape of an antenna.

In an actual communication scenario, due to impact of noise and interference, there is a specific measurement error in a measurement value of time or an angle, and there is also a specific error in a corresponding positioning result.

FIG. 6 is a diagram of a time-domain channel response. In FIG. 6, a horizontal coordinate is a sampling point, and a vertical coordinate is a power that is of a time-domain channel response obtained by measuring a reference signal and that is at a different time-domain sampling point. As shown in FIG. 6, signal powers of time-domain sampling points in a start segment are weaker, and may correspond to a noise signal; and signal powers of time-domain sampling points in an intermediate segment are stronger, and may correspond to a multipath response of an actual signal. In an actual scenario, a start location of an actual signal needs to be determined in an environment with interference and noise, to obtain accurate signal propagation time.

In addition, for positioning measurement, usually, a measurement signal needs to be a signal from a line of sight (line of sight, LOS), because a signal from a non-line of sight (non-line of sight, NLOS) may cause a large estimation error.

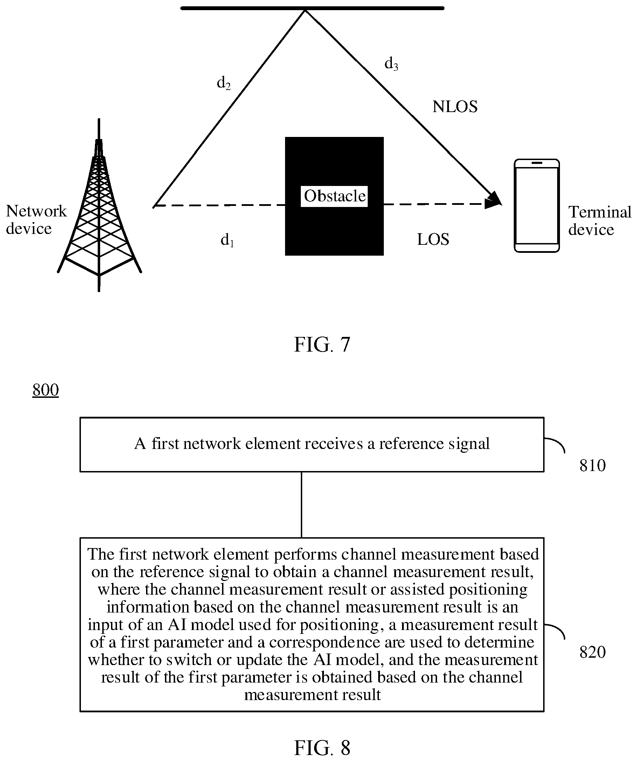

FIG. 7 is a diagram of a LOS and an NLOS. As shown in FIG. 7, a LOS (a dashed line in FIG. 7) between a network device and a terminal device is blocked by an obstacle, and a reference signal transmitted between the network device and the terminal device is actually a reflected NLOS (a solid line in FIG. 7). It can be learned from the figure that a distance of the NLOS (that is, d2+d3) is greater than a distance of the LOS (that is, d1). If the NLOS is considered as a LOS during location estimation, a large measurement error may occur. Therefore, classification of the LOS and the NLOS is also important for positioning precision.

It should be noted that, in this application, an "indication" may include a direct indication, an indirect indication, an explicit indication, or an implicit indication. When a piece of indication information is described as indicating A, it may be understood that the indication information carries A, directly indicates A, or indirectly indicates A. The indirect indication may mean that the indication information directly indicates B and a correspondence between B and A, to indicate A by using the indication information. The correspondence between B and A may be predefined in a protocol, pre-stored, or obtained by using a configuration between network elements.

In this application, information indicated by indication information is referred to as to-be-indicated information. In a specific implementation process, the to-be-indicated information is indicated in a plurality of manners, for example but not limited to, a manner of directly indicating the to-be-indicated information. For example, the to-be-indicated information or an index of the to-be-indicated information directly indicates the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for sending separately; and sending periodicities and/or sending occasions of these pieces of sub-information may be the same or different.

It should be further noted that at least one (item) in this application indicates one (item) or more (items). "A plurality of (items) "means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as first and second may be used in this application to describe objects, these objects are not limited by these terms. These terms are merely used to distinguish the objects from each other.

The following describes, in detail with reference to the accompanying drawings, a communication method provided in embodiments of this application. Embodiments provided in this application may be applied to the communication system shown in FIG. 1 or FIG. 2. This is not limited.

In the following embodiments, a first network element may be an inference network element of an AI model, or may also be a storage network element of an AI model library and/or a training network element of the AI model. A second network element is a training network element of the AI model and/or a storage network element of the AI model library, or is also an inference network element of the AI model. An AI model used for positioning may be deployed in the first network element, in other words, the first network element may perform positioning by using the AI model. An AI model used for positioning may also be deployed in the second network element, in other words, the second network element may perform positioning by using the AI model. The AI model library may include one or more AI models.

For example, the first network element and the second network element may be logically deployed separately. In different implementations, the first network element and the second network element may be physically deployed in a same network element or different network elements. This is not limited. For example, the first network element is a terminal device, the second network element is a server (also referred to as a host) or a cloud device in an over the top (over the top, OTT) system, and the terminal device may communicate with the server or the cloud device in the OTT system through an internet. For another example, the first network element is a module (for example, a module at a physical layer) in a device (for example, a terminal device), and the second network element is another module (for example, a module at an application layer, for example, an application module connected to an OTT server) in the device (for example, the terminal device). It may be understood that, in embodiments of this application, the module may be implemented by hardware, or may be implemented by software. This is not limited.

For example, the first network element may be a terminal device or a component (for example, a chip or a circuit) of the terminal device; and the second network element may be a network device or a component (for example, a chip or a circuit) of the network device, the second network element may be a positioning device (for example, an LMF) or a component (for example, a chip or a circuit) of the positioning device; the second network element may be a core network element or a component (for example, a chip or a circuit) of the core network element, or the second network element may be a server or a cloud device in an OTT system or a component (for example, a chip or a circuit) of the server or the cloud device in the OTT system.

FIG. 8 is a diagram of a communication method 800 according to an embodiment of this application. The method 800 shown in FIG. 8 may include the following steps.

810: A first network element receives a reference signal.

For example, the reference signal may be, for example, a reference signal used for positioning, for example, a PRS or a preamble (preamble).

In an example, the reference signal may be a reference signal between a terminal device and a network device, for example, an uplink positioning SRS or a downlink PRS. For example, the first network element is a terminal device, and the first network element receives a downlink PRS from a network device. For another example, the first network element is a network device, and the first network element receives an uplink positioning SRS from a terminal device.

In another example, the reference signal may be a reference signal between terminal devices, for example, a sidelink-positioning reference signal (sidelink-positioning reference signal, SL-PRS). For example, the first network element is a terminal device, and the first network element receives an SL-PRS from another terminal device.

820: The first network element performs channel measurement based on the reference signal to obtain a channel measurement result, where the channel measurement result or assisted positioning information based on the channel measurement result is an input of an AI model used for positioning, a measurement result of a first parameter and a correspondence are used to determine whether to switch or update the AI model, the measurement result of the first parameter is obtained based on the channel measurement result, and the correspondence includes a correspondence between an AI model used for positioning and a value of the first parameter.

For example, an AI model library includes W AI models, where W is an integer greater than 1 or equal to 1. It is assumed that it is determined, based on the measurement result of the first parameter and the correspondence, that the AI model needs to be switched or updated, for example, an AI model #1 needs to be switched or updated to an AI model #2. If the AI model #2 is one of the W AI models, the AI model #1 is switched to the AI model #2. Alternatively, if the AI model #2 does not belong to the W AI models, the AI model #1 is updated to the AI model #2. In other words, when there is no switchable AI model in the AI model library, the AI model may be updated. In an example, the AI model may be updated in any one of the following manners: retraining an original AI model by using a dataset based on the original AI model, where optionally, the dataset may include a small quantity of samples; retraining some function layers of an original AI model by using a dataset based on the original AI model, where optionally, the dataset may include a small quantity of samples; retraining the AI model by using a dataset, where optionally, the dataset may include a large quantity of samples; or retraining some function layers of the AI model by using a dataset, where optionally, the dataset may include a large quantity of samples. This is not limited.

For ease of description, "adjusting an AI model" represents "switching or updating an AI model" in the following descriptions. In other words, "adjusting an AI model" described below may be replaced with "switching an AI model", or may be replaced with "updating an AI model".

Based on embodiments of this application, a network element may determine, based on an input feature of an AI model, whether the AI model needs to be adjusted. The AI model may be an AI model used for positioning. Specifically, assuming that an input of the AI model is a channel measurement result, a measurement result of a first parameter, namely, the input feature of the AI model, may be obtained based on the channel measurement result, and there is a correspondence between an AI model and a value of the first parameter. In this way, the network element may determine, based on the correspondence and the measurement result that is of the first parameter and that is obtained based on the channel measurement result, a specific AI model corresponding to the measurement result of the first parameter, and determine, by comparing the specific AI model with the current AI model, whether the AI model needs to be adjusted. It is considered that a change of a channel environment may affect positioning precision. For example, the change of the channel environment may cause deterioration of positioning performance when a single AI model is used. Because the measurement result of the first parameter is obtained based on the channel measurement result, the measurement result of the first parameter can reflect a current channel environment. In this way, determining, based on the measurement result of the first parameter, whether to adjust the AI model can implement adjusting of the AI model in a timely manner based on the change of the channel environment, thereby improving positioning precision of the AI model.

In embodiments of this application, how to perform initial selection of the AI model used for positioning is not limited. For example, the AI model configured in the first network element may be trained by the first network element, may be trained by another network element (for example, the second network element) and sent to the second network element, or may be selected by another network element (for example, the second network element) for the first network element from a current AI model library.

In an example, the channel measurement result may be used as an input of the AI model used for positioning. For the AI model used for positioning, the input of the AI model may be the channel measurement result obtained through the measurement based on the reference signal, and an output of the AI model may be location-related information of the first network element. For brevity, the AI model used for positioning is referred to as an AI model for short below.

In a possible case, the AI model is used to directly position a location of the first network element. In this case, the input of the AI model is the channel measurement result obtained through the measurement based on the reference signal, and the output is location information of the first network element.

In another possible case, the AI model is used to perform assisted positioning (or referred to as indirect positioning) on a location of the first network element. In this case, the input of the AI model is the channel measurement result obtained through the measurement based on the reference signal, and the output is assisted positioning information, where the assisted positioning information is used to determine the location of the first network element. For example, the assisted positioning information may include but is not limited to at least one of the following: a LOS probability, an AOA, an AoD, a TOA, or a time difference of arrival of the reference signal.

In another example, the assisted positioning information based on the channel measurement result may be used as an input of the AI model. For the AI model used for positioning, the input of the AI model may be the channel measurement result-assisted positioning information, and an output of the AI model may be location-related information of the first network element. The assisted positioning information based on the channel measurement result may be obtained in a conventional manner, or may be an output of an AI model. This is not limited.

In a possible case, the AI model is used to directly position a location of the first network element. In this case, the input of the AI model is the channel measurement result-assisted positioning information, and the output is location information of the first network element.

In another possible case, the AI model is used to perform assisted positioning (or referred to as indirect positioning) on a location of the first network element. In this case, the input of the AI model is the channel measurement result-assisted positioning information, and the output is another piece of assisted positioning information, where the another piece of assisted positioning information is used to determine the location of the first network element.

It should be noted that, in embodiments of this application, an example in which the channel measurement result is obtained through the channel measurement based on the reference signal is mainly used for description. This is not limited. For example, the channel measurement result may further include a pedestrian dead reckoning (pedestrian dead-reckoning, PDR) measurement result of a terminal; or the channel measurement result may further include an environment monitoring identification result of a camera, for example, an environment monitoring identification result of a monitoring camera in an indoor factory.

The correspondence includes the correspondence between the AI model and the value of the first parameter. In other words, different values of the first parameter correspond to different AI models. In this way, an AI model corresponding to the measurement result of the first parameter may be learned of by using the measurement result of the first parameter (namely, a value that is of the first parameter and that is obtained through the current measurement).

A first-type AI model and a second-type AI model are mentioned below for a plurality of times.

For example, the first-type AI model represents an AI model deployed in the first network element, or an AI model configured in the first network element. An AI-related operation may be implemented by configuring an AI function (for example, an AI module) in the first network element. For example, positioning is performed by using the AI model. In this example, the correspondence may include a correspondence between a first-type AI model and a value of the first parameter. Whether the first-type AI model (namely, the AI model configured in the first network element) needs to be adjusted may be determined based on the measurement result of the first parameter (namely, the value that is of the first parameter and that is obtained through the current measurement) and the correspondence between the first-type AI model and the value of the first parameter.

For example, the second-type AI model represents an AI model deployed in the second network element, or an AI model configured in the second network element. An AI-related operation may be implemented by configuring an AI function (for example, an AI module) in the second network element. For example, positioning is performed by using the AI model. In this example, the correspondence may include a correspondence between a second-type AI model and a value of the first parameter. Whether the second-type AI model (namely, the AI model configured in the second network element) needs to be adjusted may be determined based on the measurement result of the first parameter (namely, the value that is of the first parameter and that is obtained through the current measurement) and the correspondence between the second-type AI model and the value of the first parameter.

Optionally, the first-type AI model and the second-type AI model may be jointly used for positioning. For example, the first-type AI model is used for assisted positioning, and the second-type AI model is used for direct positioning. For example, an input of the first-type AI model is a channel measurement result, and an output of the first-type AI model is assisted positioning information. An input of the second-type AI model is assisted positioning information, in other words, the input of the second-type AI model is the output of the first-type AI model, and the output of the second-type AI model is location information of the first network element.

Optionally, the first-type AI model and the second-type AI model may be separately used. For example, the first-type AI model is used for direct positioning or assisted positioning. For another example, the second-type AI model is used for direct positioning or assisted positioning. When the first-type AI model or the second-type AI model is used for assisted positioning, the first network element or the second network element may obtain the location information based on the assisted positioning information in a manner that is not based on the AI model, for example, a conventional manner.

In the following embodiments, unless otherwise specified, the correspondence in the following embodiments may be applicable to the correspondence between the first-type AI model and the value of the first parameter (referred to as a first-type correspondence for short), and may also be applicable to the correspondence between the second-type AI model and the value of the first parameter (referred to as a second-type correspondence for short). It may be understood that the first-type correspondence and the second-type correspondence may be the same, or may be different. For example, the first-type correspondence and the second-type correspondence have an intersection, for example, the first-type correspondence is a subset of the second-type correspondence, the second-type correspondence is a subset of the first-type correspondence, or the first-type correspondence and the second-type correspondence are completely different.

In addition, in this application, there may be a plurality of AI models that have correspondences with a specific value of the first parameter. Therefore, the correspondence between the AI model and the value of the first parameter in this application may be replaced with a correspondence between an AI model group and the value of the first parameter. An AI model group corresponding to a same value of the first parameter may include one or more AI models. These AI models may have some different features. For example, the feature includes one or more of implementation complexity, performance, and the like. After a specific value of the first parameter is determined, a specific AI model selected from a corresponding AI model group may be predefined according to a protocol, or may be determined based on a system requirement or setting. This is not limited herein. When the AI model to be switched or updated is indicated, an AI model group may be indicated, or a specific AI model in the AI model group may be indicated.

In an example, the correspondence may exist, for example, may be stored or transmitted, in a form of a table, a function, a text, or a character string. Table 1 is an example of presenting the correspondence in a form of a table.

Table 1

| AI model | Value N of the first parameter |
|---|---|
| AI model #1 | N1 |
| AI model #2 | N2 |
| AI model #3 | N3 |
| AI model #4 | N4 |

Values N1, N2, N3, and N4 of the first parameter in Table 1 may be specific values, or may be value ranges. This is not limited.

Table 1 is used as an example. A value that is of the first parameter and that corresponds to the AI model #1 is N1. In other words, if the value N of the first parameter is N1, the AI model is the AI model #1. A value that is of the first parameter and that corresponds to the AI model #2 is N2. In other words, if the value N of the first parameter is N2, the AI model is the AI model #2. For example, if the AI model currently used for positioning is the AI model #1, and a value that is of the first parameter and that is actually obtained through the measurement is N2, it means that the AI model needs to be adjusted, in other words, the AI model #1 needs to be adjusted to the AI model #2.

The measurement result of the first parameter is obtained based on the channel measurement result, to be specific, the first parameter represents a parameter that can reflect a channel environment, or a parameter that can reflect a channel condition. In other words, a change of the channel environment may be reflected in the measurement result of the first parameter. For example, the first parameter represents a parameter that can reflect an NLOS degree of a channel.

Optionally, the first parameter includes one or more of the following: a channel time-domain quality indicator, a channel frequency-domain quality indicator, a quantity of paths whose energy is greater than k times energy of a first path in a channel impulse response (channel impulse response, CIR), an average power of a plurality of sampling points, a LOS probability, a signal to interference plus noise ratio (signal to interference plus noise ratio, SINR), a reference signal received power (reference signal received power, RSRP), a received signal strength indicator (received signal strength indicator, RSSI), a Rician factor, or a moving speed of the first network element. It may be understood that these indicators may be obtained by measuring the reference signal, or by performing corresponding processing on the measurement result of the reference signal. A specific processing process is not limited herein, for example, may be some known or future processing.

Example 1: The first parameter includes the channel time-domain quality indicator.

In this example, the correspondence may include a correspondence between an AI model and a channel time-domain quality indicator. In other words, different values of the channel time-domain quality indicator correspond to different AI models. In this way, a corresponding AI model may be learned of based on a value that is of the channel time-domain quality indicator and that is obtained through actual measurement, and the corresponding AI model is compared with a current AI model, to determine whether the current AI model needs to be adjusted.

Specifically, the first network element performs channel measurement based on the reference signal to obtain the channel measurement result, and obtains the channel time-domain quality indicator through calculation based on the channel measurement result. For example, the first network element performs channel measurement based on the reference signal to obtain a CIR, and obtains the channel time-domain quality indicator through calculation based on the CIR. In embodiments of this application, when the first parameter is calculated based on the CIR, a quantity of sampling points is not limited. In the example shown in FIG. 6, a quantity of sampling points is 100. In addition, the CIR may be replaced with any one of the following: time-aligned CIRs, a cross-correlation sequence of a plurality of CIR sequences, a normalized CIR, or the like. Details are not described below again.

The channel time-domain quality indicator may include, for example, one or more of the following: a timing error group (timing error group, TEG), an inter-site synchronization error, or a delay spread. The TEG and the delay spread may be measured by the first network element. The inter-site synchronization error may be provided by another network element, and the another network element may be, for example, another network element different from the first network element and the second network element. If the channel time-domain quality indicator is the TEG, because the TEG can reflect a change of the channel environment, the AI model can be adaptively adjusted based on the change of the channel environment. In addition, because the TEG is a feedback value (in other words, the first network element measures the TEG), the feedback value may be reused to determine whether the AI model needs to be adjusted, so that overheads caused by monitoring the first parameter can be reduced. If the channel time-domain quality indicator is the delay spread, because the delay spread can reflect a change of the channel environment, the AI model can be adaptively adjusted based on the change of the channel environment. In addition, because the delay spread can accurately reflect the change of the channel environment, precision of determining, by using the delay spread, whether to adjust the AI model is high.

For example, Table 2 shows an example of a correspondence between an AI model and an inter-site synchronization error.

Table 2

| AI model | Inter-site synchronization error |
|----------|----------------------------------|
| AI model #1 | Level 1 |
| AI model #2 | Level 2 |
| AI model #3 | Level 3 |
| AI model #4 | Level 4 |
| AI model #5 | Level 5 |
| AI model #6 | Level 6 |

It can be learned from Table 2 that different inter-site synchronization errors correspond to different AI models. For example, when the inter-site synchronization error is the level 1, a corresponding AI model is the AI model #1. Therefore, a corresponding AI model may be learned of based on an inter-site synchronization error obtained through actual measurement, and the corresponding AI model is compared with a current AI model, to determine whether the current AI model needs to be adjusted.

It may be understood that, Table 2 is an example for description. This is not limited. For example, more inter-site synchronization error levels may be divided in Table 2.

For example, Table 3 shows an example of a correspondence between an AI model and a delay spread.

Table 3

| AI model | Delay spread |
|----------|--------------|
| AI model #1 | A |
| AI model #2 | B |
| AI model #3 | C |
| AI model #4 | D |
| AI model #5 | E |
| AI model #6 | F |

Delay spread: After being propagated over a multipath wireless channel, a transmit signal arrives at a receiving end at different time points. A signal that arrives at the receiving end the fastest is used as a reference. A time difference between the reference and another signal corresponds to the delay spread. Usually, measurement is performed by using an average delay spread or a root mean square delay spread. A smaller delay spread is closer to a pure LOS (pure LOS) path.

It can be learned from Table 3 that different delay spreads correspond to different AI models. For example, when the delay spread is a, a corresponding AI model is the AI model #1. Therefore, a corresponding AI model may be learned of based on a delay spread obtained through actual measurement, and the corresponding AI model is compared with a current AI model, to determine whether the current AI model needs to be adjusted.

It may be understood that, Table 3 is an example for description. This is not limited. For example, more delay spreads may be divided in Table 3.

Example 2: The first parameter includes the channel frequency-domain quality indicator.

In this example, the correspondence may include a correspondence between an AI model and a channel frequency-domain quality indicator. In other words, different values of the channel frequency-domain quality indicator correspond to different AI models. In this way, a corresponding AI model may be learned of based on a value that is of the channel frequency-domain quality indicator and that is obtained through actual measurement, and the corresponding AI model is compared with a current AI model, to determine whether the current AI model needs to be adjusted.

Specifically, the first network element performs channel measurement based on the reference signal to obtain the channel measurement result, and obtains the channel frequency-domain quality indicator through calculation based on the channel measurement result. For example, the first network element performs channel measurement based on the reference signal to obtain a CIR, and obtains the channel frequency-domain quality indicator through calculation based on the CIR. For another example, the first network element performs channel measurement based on the reference signal to obtain a channel frequency-domain response (channel frequency response, CFR), and obtains the channel frequency-domain quality indicator through calculation based on the CFR. In embodiments of this application, when the first parameter is calculated based on the CFR, a bandwidth, a subband, and a quantity of ports of the CFR are not limited. In addition, the CFR may be replaced with a normalized CFR. Details are not described below again.

The channel frequency-domain quality indicator may be, for example, a Doppler frequency shift, or may be a Doppler frequency. If the channel frequency-domain quality indicator is a Doppler frequency shift or a Doppler frequency, because the Doppler frequency shift or the Doppler frequency can reflect a change of the channel environment, the AI model can be adaptively adjusted based on the change of the channel environment. In addition, because the Doppler frequency shift or the Doppler frequency can accurately reflect the change of the channel environment, precision of determining, by using the Doppler frequency shift or the Doppler frequency, whether the AI model needs to be adjusted is high.

In addition, the Doppler shift can reflect the moving speed of the first network element. Therefore, different moving speeds may also correspond to different AI models. For example, a corresponding moving speed is learned of based on a Doppler frequency shift obtained through measurement, and a corresponding AI model may be learned of based on the moving speed. For example, a unit of the moving speed may be, for example, kilometer per hour (km/h), and a value of the moving speed may be, for example, 0, 10, 30, 60, 90, or 120. Different values of the moving speed correspond to different AI models.

For an example of the correspondence when the first parameter is the channel frequency-domain quality indicator, refer to Table 2 or Table 3. Details are not described herein again.

Example 3: The first parameter includes the quantity of paths whose energy is greater than k times the energy of the first path in the CIR, where k is a digit greater than 0. For example, k is a digit greater than 0 and less than 1 or equal to 1. Because the quantity of paths whose energy is greater than k times the energy of the first path in the CIR can reflect a change of the channel environment, the AI model can be adaptively adjusted based on the change of the channel environment. In addition, when the measurement result of the first parameter is transmitted between network elements, if the measurement result of the first parameter is the quantity of paths whose energy is greater than k times the energy of the first path in the CIR, overheads are low.

For brevity, the quantity of paths whose energy is greater than k times the energy of the first path in the CIR is referred to as a path quantity #A for short below.

In this example, the correspondence may include a correspondence between an AI model and a path quantity #A. In other words, different values of the path quantity #A correspond to different AI models. In this way, a corresponding AI model may be learned of based on a value that is of the path quantity #A and that is obtained through actual measurement, and the corresponding AI model is compared with a current AI model, to determine whether the current AI model needs to be adjusted.

Specifically, the first network element performs channel measurement based on the reference signal to obtain the channel measurement result, and obtains the path quantity #A through calculation based on the channel measurement result. For example, the first network element performs channel measurement based on the reference signal to obtain a CIR, and obtains the path quantity #A through calculation based on the CIR.

The path quantity #A represents a quantity of paths whose energy is greater than k times energy of a first path in sampled paths. The first path indicates a 1st path on which a signal arrives at a receive side, for example, a path that is detected based on an algorithm and that is considered as a 1st path on which a signal arrives at the receive side. A specific manner of algorithm detection is not limited. For example, an algorithm detection method may be as follows: First, a location of a strongest path in a plurality of paths is first found in a time-domain channel response based on a strongest path threshold and a strongest path search window; and then, a location of a first path is searched for based on the found location of the strongest path and based on a first path threshold and a first path search window. For another example, an algorithm detection method may be as follows: A time-domain channel response is searched for a location of a first path directly based on a first path threshold and a first path search window.

For example, Table 4 shows an example of the correspondence between the AI model and the path quantity #A.

Table 4

| AI model | Path quantity #A |
| --- | --- |
| AI model #1 | 0 |
| AI model #2 | 8 |
| AI model #3 | 16 |
| AI model #4 | 32 |
| AI model #5 | 64 |

(continued)

| AI model | Path quantity #A |
|---|---|
| AI model #6 | 128 |

It can be learned from Table 4 that different path quantities #A correspond to different AI models. For example, when the value of the path quantity #A is 128, a corresponding AI model is the AI model #6. Therefore, a corresponding AI model is determined based on a path quantity #A obtained through actual measurement, and the corresponding AI model is compared with a current AI model, to determine whether the current AI model needs to be adjusted.

It may be understood that, Table 4 is an example for description. This is not limited. For example, the specific values of the path quantity in Table 4 are merely examples. This is not limited. The value of the path quantity may be replaced with another value (for example, a specific value, or may be a value range).

Example 4: The first parameter includes the average power of the plurality of sampling points. Because the average power of the plurality of sampling points can reflect a change of the channel environment, the AI model can be adaptively adjusted based on the change of the channel environment. In addition, calculation of the average power of the plurality of sampling points is simple and easily implemented.

In this example, the correspondence may include a correspondence between an AI model and an average power of a plurality of sampling points. In other words, different average powers of a plurality of sampling points correspond to different AI models. The plurality of sampling points may include all sampling points. In this way, a corresponding AI model may be learned of based on an average power that is of the plurality of sampling points and that is obtained through actual measurement, and the corresponding AI model is compared with a current AI model, to determine whether the current AI model needs to be adjusted.

Specifically, the first network element performs channel measurement based on the reference signal to obtain the channel measurement result, and obtains the average power of the plurality of sampling points through calculation based on the channel measurement result. For example, the first network element performs channel measurement based on the reference signal to obtain a CIR, and obtains the average power of the plurality of sampling points through calculation based on the CIR.

The average power of the plurality of sampling points represents an average power of a plurality of sampling points in the received reference signal. It may be understood that the average power of the plurality of sampling points may be replaced with an average power of some sampling points or an average power of all sampling points, in other words, determining may be performed based on the average power of the some sampling points or the average power of all the sampling points. A quantity of sampling points is not limited.

For example, Table 5 shows an example of the correspondence between the AI model and the average power of the plurality of sampling points.

Table 5

| AI model | Average power of the plurality of sampling points |
|---|---|
| AI model #1 | P1 |
| AI model #2 | P2 |
| AI model #3 | P3 |
| AI model #4 | P4 |
| AI model #5 | P5 |
| AI model #6 | P6 |

It can be learned from Table 5 that different average powers of the plurality of sampling points correspond to different AI models. For example, when the average power of the plurality of sampling points is P6, a corresponding AI model is the AI model #6. Therefore, a corresponding AI model is determined based on an average power that is of the plurality of sampling points and that is obtained through actual measurement, and the corresponding AI model is compared with a current AI model, to determine whether the current AI model needs to be adjusted.

It may be understood that, Table 5 is an example for description. This is not limited. For example, the specific values of the average power of the plurality of sampling points in Table 5 are merely examples. This is not limited. The value of the average power of the plurality of sampling points may be replaced with another value (for example, a specific value, or may be a value range).

Example 5: The first parameter includes the LOS probability. Because the LOS probability can reflect a change of the channel environment, the AI model can be adaptively adjusted based on the change of the channel environment. In addition, when the measurement result of the first parameter is transmitted between network elements, if the measurement result of the first parameter is the LOS probability, overheads are low. In this example, the correspondence may include a correspondence between an AI model and a LOS probability. In other words, different LOS probabilities correspond to different AI models. In this way, a corresponding AI model may be learned of based on a LOS probability obtained through actual measurement, and the corresponding AI model is compared with a current AI model, to determine whether the current AI model needs to be adjusted.

For example, Table 6 shows an example of the correspondence between the AI model and the LOS probability.

Table 6

| AI model | LOS probability |
|----------|-----------------|
| AI model #1 | 0 |
| AI model #2 | 1/4 |
| AI model #3 | 1/2 |
| AI model #4 | 3/4 |
| AI model #5 | 1 |

It can be learned from Table 6 that different LOS probabilities correspond to different AI models. For example, when a value of the LOS probability is 1/4, a corresponding AI model is the AI model #2. Therefore, a corresponding AI model may be determined based on a LOS probability obtained through actual measurement, and the corresponding AI model is compared with a current AI model, to determine whether the current AI model needs to be adjusted.

It may be understood that, Table 6 is an example for description. This is not limited. For example, specific values of the LOS probability in Table 6 are merely examples. This is not limited. The value of the LOS probability may be replaced with another value (for example, a specific value, or may be a value range).

Example 6: The first parameter includes the SINR. Because the SINR can reflect a change of the channel environment, the AI model can be adaptively adjusted based on the change of the channel environment. In addition, when the measurement result of the first parameter is transmitted between network elements, if the measurement result of the first parameter is the SINR, overheads are low.

In this example, the correspondence may include a correspondence between an AI model and an SINR. In other words, different SINRs correspond to different AI models. In this way, a corresponding AI model may be learned of based on an SINR obtained through actual measurement, and the corresponding AI model is compared with a current AI model, to determine whether the current AI model needs to be adjusted.

Specifically, the first network element performs channel measurement based on the reference signal to obtain the channel measurement result, and obtains the SINR through calculation based on the channel measurement result. For example, the first network element performs channel measurement based on the reference signal to obtain a CFR, and obtains an SINR of a full band or a subband of the CFR through calculation based on the CFR.

For example, a value of the SINR may be, for example, -30, -20, -10, 0, 10, 20, or 30, and different values of the SINR correspond to different AI models. For an example of the correspondence when the first parameter is the SINR, refer to Table 2 to Table 5. Details are not described herein again.

Example 7: The first parameter includes the RSRP. Because the RSRP can reflect a change of the channel environment, the AI model can be adaptively adjusted based on the change of the channel environment. In addition, when the measurement result of the first parameter is transmitted between network elements, if the measurement result of the first parameter is the RSRP, overheads are low.

In this example, the correspondence may include a correspondence between an AI model and an RSRP. In other words, different RSRPs correspond to different AI models. In this way, a corresponding AI model may be learned of based on an RSRP obtained through actual measurement, and the corresponding AI model is compared with a current AI model, to determine whether the current AI model needs to be adjusted. The RSRP may also be replaced with an interference level, in other words, different RSRPs correspond to different interference levels.

Specifically, the first network element performs channel measurement based on the reference signal to obtain the channel measurement result, and obtains the RSRP through calculation based on the channel measurement result. For example, the first network element performs channel measurement based on the reference signal to obtain a CFR, and obtains an RSRP of a full band or a subband of the CFR through calculation based on the CFR.

For example, a value of the RSRP may be, for example, -30, -20, -10, 0, 10, 20, or 30, and different values of the RSRP correspond to different AI models. For an example of the correspondence when the first parameter is the RSRP, refer to Table 2 to Table 5. Details are not described herein again.

Example 8: The first parameter includes the RSSI. Because the RSSI can reflect a change of the channel environment, the AI model can be adaptively adjusted based on the change of the channel environment. In addition, when the measurement result of the first parameter is transmitted between network elements, if the measurement result of the first parameter is the RSSI, overheads are low.

In this example, the correspondence may include a correspondence between an AI model and an RSSI. In other words, different RSSIs correspond to different AI models. In this way, a corresponding AI model may be learned of based on an RSSI obtained through actual measurement, and the corresponding AI model is compared with a current AI model, to determine whether the current AI model needs to be adjusted.

Specifically, the first network element performs channel measurement based on the reference signal to obtain the channel measurement result, and obtains the RSSI through calculation based on the channel measurement result. For example, the first network element performs channel measurement based on the reference signal to obtain a CFR, and obtains an RSSI of a full band or a subband of the CFR through calculation based on the CFR.

For example, a value of the RSSI may be, for example, -30, -20, -10, 0, 10, 20, or 30, and different values of the RSSI correspond to different AI models. For an example of the correspondence when the first parameter is the RSSI, refer to Table 2 to Table 5. Details are not described herein again.

Example 9: The first parameter includes the Rician factor. Because the Rician factor can reflect a change of the channel environment, the AI model can be adaptively adjusted based on the change of the channel environment. In addition, when the measurement result of the first parameter is transmitted between network elements, if the measurement result of the first parameter is the Rician factor, overheads are low.

In this example, the correspondence may include a correspondence between an AI model and a Rician factor. In other words, different Rician factors correspond to different AI models. In this way, a corresponding AI model may be learned of based on a Rician factor obtained through actual measurement, and the corresponding AI model is compared with a current AI model, to determine whether the current AI model needs to be adjusted.

Specifically, the first network element performs channel measurement based on the reference signal to obtain the channel measurement result, and obtains the RSRP through calculation based on the channel measurement result. For example, the first network element performs channel measurement based on the reference signal to obtain a CIR, and obtains a Rician factor through calculation based on the CIR. For another example, the first network element performs channel measurement based on the reference signal to obtain a CFR, and obtains a Rician factor through calculation based on the CFR.

The Rician factor represents a ratio of a power of a LOS path to a power of an NLOS path in a plurality of paths. The Rician factor is related to a geometric location on a map. Specifically, when the first network element moves to a different location, the Rician factor also changes. In this case, powers of the plurality of paths also change with the location.

Generally, channel propagation conditions are classified into a LOS and an NLOS. In a LOS scenario, at least one LOS path, namely, a pure LOS (Pure LOS), is included, and X NLOS paths are further included, where X is an integer greater than 0 or equal to 0. In the LOS scenario, energy of the LOS path is higher than total energy of the NLOS paths. Generally, the Rician factor is used to define a ratio of a power of the LOS path to a power of the NLOS paths. The power of the NLOS paths represents a sum of powers of all the NLOS paths. An NLOS scenario includes an NLOS path, and does not include a LOS path. It can be learned from the foregoing descriptions that, generally, a higher Rician factor indicates higher energy of a LOS path relative to energy of an NLOS, and a lower NLOS degree.

For example, Table 7 shows an example of the correspondence between the AI model and the Rician factor.

Table 7

| AI model | Rician factor |
|---|---|
| AI model #1 | 1/2 |
| AI model #2 | 1 |
| AI model #3 | 2 |
| AI model #4 | 3 |
| AI model #5 | 4 |
| AI model #6 | 5 |

It can be learned from Table 7 that different Rician factors correspond to different AI models. For example, when the Rician factor is 5, a corresponding AI model is the AI model #6. Therefore, a corresponding AI model may be learned of based on a Rician factor obtained through actual measurement, and the corresponding AI model is compared with a current AI model, to determine whether the current AI model needs to be adjusted.

It may be understood that, Table 7 is an example for description. This is not limited. For example, in Table 7, more Rician factors may be divided.

The foregoing describes each piece of information. The first parameter may alternatively include at least two pieces of the foregoing information. The following briefly lists an example for description.

Example 10: The first parameter includes the path quantity #A and the inter-site synchronization error.

In this example, the correspondence may be a correspondence between an AI model, a path quantity #A, and an inter-site synchronization error.

For example, Table 8 shows an example of the correspondence between the AI model, the path quantity #A, and the inter-site synchronization error.

Table 8 is used as an example. For example, if an AI model currently used for positioning is the AI model #1, a value that is of the path quantity #A and that is obtained through actual measurement belongs to a second value range, and the inter-site synchronization error is a level 2, it indicates that the AI model needs to be adjusted, to be specific, the AI model #1 needs to be adjusted to the AI model #2. For another example, if an AI model currently used for positioning is the AI model #1, a value that is of the path quantity #A and that is obtained through actual measurement belongs to a second value range, and the inter-site synchronization error is a level 5, it indicates that the AI model does not need to be adjusted.

Table 8

| AI model | Path quantity #A | Inter-site synchronization error |
| --- | --- | --- |
| AI model #1 | First value range | Level 1 |
| AI model #2 | Second value range | Level 2 |
| AI model #3 | Third value range | Level 3 |
| AI model #4 | Fourth value range | Level 4 |
| AI model #5 | Fifth value range | Level 5 |
| AI model #6 | Sixth value range | Level 6 |

It may be understood that, Table 8 is an example for description. This is not limited.

Optionally, the first network element receives first indication information, where the first indication information indicates that the first parameter is used to determine whether to adjust the AI model. Based on this, the first network element may learn, based on the first indication information, that the first parameter needs to be measured, and may determine, by using a measurement result of the first parameter, whether to adjust the AI model.

The first indication information indicating that the first parameter is used to determine whether to adjust the AI model, may be replaced with the first indication information indicating to measure the first parameter, or may be replaced with the first indication information indicating that the first parameter reflects a current channel environment (for example, an NLOS degree of a current channel).

It may be understood that, the foregoing descriptions are example descriptions. This is not limited. For example, the first network element may also determine, based on a protocol-predefined or pre-stored setting, a specific type of the first parameter to be measured.

Optionally, the first network element may further send, to the second network element, a parameter that can be measured by the first network element. For example, the second network element may select one or more parameters that can be measured by the first network element as the first parameter, and indicate, by using the first indication information, that the first parameter is used to determine whether to adjust the AI model. For example, the parameter that can be measured by the first network element includes the path quantity #A and the LOS probability. The first network element sends information to the second network element, where the information indicates that the parameter that can be measured by the first network element includes the path quantity #A and the LOS probability. The second network element sends first indication information to the first network element based on the information, where the first indication information indicates that the path quantity #A and/or the LOS probability are used to determine whether to adjust the AI model.

For example, in this embodiment of this application, the determining whether to adjust the AI model includes the following two solutions.

Solution 1: The first network element determines, based on the measurement result of the first parameter and the correspondence, whether to adjust the AI model.

A manner in which the first network element obtains the correspondence is not limited.

For example, the first network element may locally store the correspondence.

For another example, the first network element receives the correspondence. For example, the first network element receives the correspondence from another network element (for example, the second network element). For example, the another network element maintains the correspondence, and the another network element actively sends the correspondence to the first network element. For another example, the another network element maintains the correspondence, and after receiving a request of the first network element, the another network element sends the correspondence to the first network element.

Table 1 is used as an example. For example, assuming that the current AI model is the AI model #2, and the measurement result that is of the first parameter and that is obtained by the first network element based on the channel measurement result is N3, the first network element determines that the AI model needs to be adjusted, to be specific, the AI model #2 needs to be switched to the AI model #3. For another example, assuming that the current AI model is the AI model #4, and the measurement result that is of the first parameter and that is obtained by the first network element based on the channel measurement result is N6, because the AI model library has no AI model corresponding to N6, the first network element determines that the AI model #4 is to be updated.

According to the solution 1, optionally, when the first network element determines that the AI model needs to be adjusted, the first network element obtains an adjusted AI model.

In a first possible case, if the first network element determines, based on the measurement result of the first parameter and the correspondence, that the first-type AI model used for positioning is to be adjusted from a first AI model to a second AI model, for example, the first network element sends request information to the second network element, where the request information is used to request the second AI model; and the first network element receives a response to the request information, where the response to the request information includes information about the second AI model. In this case, the channel measurement result is an input of the first-type AI model, and the correspondence includes a correspondence between a first-type AI model and a value of the first parameter. Specifically, the first network element determines, based on the measurement result of the first parameter and the correspondence between the first-type AI model and the value of the first parameter, that the first-type AI model is to be adjusted from the first AI model to the second AI model.

In this case, the second network element may represent a network element that stores the second AI model, or the second network element may represent a network element that can obtain the second AI model. For example, that the request information is used to request the second AI model includes: The request information is used to request to update the AI model. An updated AI model is the second AI model.

The information about the second AI model may include, for example, information that can identify the second AI model or that can be used to obtain the second AI model. For example, the information about the second AI model includes an identifier of the second AI model and/or a neural network parameter of the second AI model. The neural network parameter may include at least one of the following: a quantity of layers of a neural network, a width of the neural network, a weight of a neuron, or all or some parameters in an activation function of the neuron. Details are not described below.

It may be understood that if the first network element stores the second AI model, the first network element may directly adjust the first AI model to the second AI model, in other words, does not need to send the request information to the second network element.

In a second possible case, if the first network element determines, based on the measurement result of the first parameter and the correspondence, that the second-type AI model used for positioning is to be adjusted from a third AI model to a fourth AI model, for example, the first network element sends second indication information to the second network element, where the second indication information indicates that the second-type AI model is to be adjusted from the third AI model to the fourth AI model.

In this case, the first network element may learn that the current second-type AI model is the third AI model. For example, the first network element learns, based on a case in which the current first-type AI model is the first AI model, and based on a matching or correspondence between the second-type AI model and the first-type AI model, that an AI model that matches the first AI model is the third AI model. For another example, the second network element notifies the first network element that the current second-type AI model is the third AI model.

In a possible implementation, the first network element directly determines, based on the measurement result of the first parameter and the correspondence, that the second-type AI model used for positioning is to be adjusted from the third AI model to the fourth AI model, where the channel measurement result is an input of the first-type AI model, an output of the first-type AI model is an input of the second-type AI model, and the correspondence includes a correspondence between a second-type AI model and a value of the first parameter. In this case, if an AI model configured in the first network element is the first-type AI model, and the first-type AI model and the second-type AI model are matched for using, optionally, the first network element may further determine, based on the matching or correspondence between the second-type AI model and the first-type AI model, to perform positioning by using a fifth AI model that matches the fourth AI model. The foregoing descriptions are example descriptions. This is not limited. For example, the first network element may alternatively determine, based on the correspondence between the first-type AI model and the value of the first parameter, whether the first-type AI model needs to be adjusted.

In another possible implementation, the first network element determines, based on the measurement result of the first parameter and the correspondence, that the first-type AI model used for positioning is to be adjusted from the first AI model to a fifth AI model, where the correspondence includes the correspondence between the first-type AI model used for positioning and the value of the first parameter. Further, the first network element learns, based on the matching or correspondence between the second-type AI model and the first-type AI model, that the second-type AI model that matches a fifth AI model in the first-type AI model is the fourth AI model. Therefore, the first network element determines that the second-type AI model is adjusted from the third AI model to the fourth AI model.

Solution 2: The first network element sends the measurement result of the first parameter to the second network element, and the second network element determines, based on the measurement result of the first parameter and the correspondence, whether to adjust the AI model.

A manner in which the second network element obtains the correspondence is not limited.

For example, the second network element may locally store the correspondence.

For another example, the second network element receives the correspondence. For example, the second network element receives the correspondence from another network element (for example, the first network element). For example, the another network element maintains the correspondence, and the another network element actively sends the correspondence to the second network element. For another example, the another network element maintains the correspondence, and after receiving a request of the second network element, the another network element sends the correspondence to the second network element.

For example, after receiving the measurement result that is of the first parameter and that is sent by the first network element, the second network element determines, based on the correspondence and an AI model currently used by the first network element, whether the AI model needs to be adjusted. Table 1 is used as an example. Assuming that the AI model currently used by the first network element is the AI model #1, and the measurement result that is of the first parameter and that is received by the second network element from the first network element is N3, the second network element determines that the AI model needs to be adjusted, to be specific, the AI model #1 needs to be switched to the AI model #3.

A manner in which the second network element learns of the AI model currently used by the first network element is not limited. For example, the first network element sends indication information to the second network element, where the indication information indicates the AI model currently used by the first network element. The indication information and the measurement result of the first parameter may be carried in one piece of signaling, or may be carried in different pieces of signaling. This is not limited. For another example, the second network element knows the AI model currently used by the first network element. For example, the AI model currently used by the first network element is sent by the second network element to the first network element.

For example, that the first network element sends the measurement result of the first parameter to the second network element may include the following possible implementations:

In a possible implementation, that the first network element sends the measurement result of the first parameter to the second network element includes: When the measurement result of the first parameter meets a specified condition, the first network element sends the measurement result of the first parameter to the second network element. The specified condition may be a preset value or a preset value range, or is not limited. The specified condition may be predefined, preset, or configured. This is not limited.

In another possible implementation, that the first network element sends the measurement result of the first parameter to the second network element includes: The first network element periodically sends the measurement result of the first parameter to the second network element. A periodicity value for sending the measurement result of the first parameter by the first network element is not limited. For example, the periodicity value may be predefined, or may be preconfigured.

The foregoing two implementations are examples for description. This is not limited. For example, each time after obtaining a measurement result of the first parameter, the first network element may send the measurement result of the first parameter to the second network element.

According to the solution 2, optionally, when determining that the AI model needs to be adjusted, the second network element indicates an adjusted AI model to the first network element.

In a first possible case, if the second network element determines, based on the measurement result of the first parameter and the correspondence, that the first-type AI model used for positioning is to be adjusted from a first AI model to a second AI model, for example, the second network element sends third indication information to the first network element, where the third indication information indicates that the first-type AI model used for positioning is to be adjusted from the first AI model to the second AI model. Optionally, the third indication information includes information about a second AI model.

In a possible implementation, the second network element directly determines, based on the measurement result of the first parameter and the correspondence, that the first-type AI model used for positioning is to be adjusted from the first AI model to the second AI model, where the channel measurement result is an input of the first-type AI model, and the correspondence includes a correspondence between a first-type AI model and a value of the first parameter. In this case, if an AI model configured in the second network element is the second-type AI model, and the first-type AI model and the second-type AI model are matched for using, optionally, the second network element uses, based on a matching or correspondence between the second-type AI model and the first-type AI model, an AI model that matches the second AI model to perform positioning.

In another possible implementation, the second network element determines, based on the measurement result of the first parameter and the correspondence, that the second-type AI model used for positioning is to be adjusted from a third AI model to a fourth AI model, where the channel measurement result is an input of the first-type AI model, an output of the first-type AI model is an input of the second-type AI model, and the correspondence includes a correspondence between a second-type AI model and a value of the first parameter. Further, the second network element learns, based on the matching or correspondence between the second-type AI model and the first-type AI model, that the first-type AI model that matches the fourth AI model in the second-type AI model is the second AI model. Therefore, the second network element determines that the first-type AI model used for positioning is adjusted from the first AI model to the second AI model.

In a second possible case, if the second network element determines, based on the measurement result of the first parameter and the correspondence, that the second-type AI model used for positioning is to be adjusted from a third AI model to a fourth AI model, for example, the second network element sends fourth indication information to the first network element, where the fourth indication information indicates that the second-type AI model used for positioning is to be adjusted from the third AI model to the fourth AI model, the channel measurement result is an input of the first-type AI model, and an output of the first-type AI model is an input of the second-type AI model, the correspondence includes a correspondence between a second-type AI model and a value of the first parameter.

For example, that the fourth indication information indicates that the second-type AI model used for positioning is to be switched or updated from the third AI model to the fourth AI model may be replaced with that the fourth indication information indicates that the second-type AI model used for positioning is switched or updated.

Optionally, in response to the fourth indication information, the first network element performs positioning by using a fifth AI model. The fifth AI model is an AI model used in matching with the fourth AI model.

The foregoing describes two solutions, which are variations of the foregoing solutions and are also applicable to embodiments of this application. For example, both the first network element and the second network element determine, based on the measurement result of the first parameter and the correspondence, whether to adjust the AI model. When determining results are consistent, it is determined that the AI model is to be adjusted; otherwise, it is determined that the AI model is not to be adjusted. An executor of the determining may be the first network element, the second network element, or another network element different from the first network element and the second network element. The executor of the determining may obtain, from the other end or another end, corresponding information used for the determining, for example, one or more of information about an AI model to be switched to, and information about whether to switch or update. For another example, the first network element determines, based on the measurement result of the first parameter and the correspondence, whether to adjust the first-type AI model, and the second network element determines, based on the measurement result of the first parameter and the correspondence, whether to adjust the second-type AI model. For another example, the another network element determines, based on the measurement result of the first parameter and the correspondence, whether to adjust the AI model, and notifies the first network element and/or the second network element of a determined result. The another network element may be, for example, another network element different from the first network element and the second network element, for example, a core network element, a network device, a third party, or an AI network element.

Optionally, in embodiments of this application, the measurement result of the first parameter includes a measurement result obtained at at least one moment and/or a measurement result provided by at least one first network element.

In a possible implementation, the measurement result of the first parameter includes measurement results obtained at at least two moments.

For example, the first network element receives a reference signal at a first moment, and performs channel measurement based on the reference signal, to obtain a channel measurement result, and obtains a measurement result of a first parameter based on the channel measurement result (denoted as a measurement result #1 for differentiation); the first network element receives a reference signal at a second moment, and performs channel measurement based on the reference signal, to obtain a channel measurement result, and obtains a measurement result of the first parameter based on the channel measurement result (denoted as a measurement result #2 for differentiation). The measurement result #1, the measurement result #2, and a correspondence are used to determine whether to adjust an AI model.

The foregoing solution 1 is used as an example. The first network element determines, based on the measurement result #1, the measurement result #2, and the correspondence, whether to adjust the AI model. For example, the first network element performs averaging processing on the measurement result #1 and the measurement result #2, and determines, based on a result of the averaging processing and the correspondence, whether to adjust the AI model.

The foregoing solution 2 is used as an example. The second network element determines, based on the measurement result #1, the measurement result #2, and the correspondence, whether to adjust the AI model. For example, the first network element performs averaging processing on the measurement result #1 and the measurement result #2, and sends a result of the averaging processing to the second network element. The second network element determines, based on the result of the averaging processing and the correspondence, whether to adjust the AI model. For another example, the first network element sends the measurement result #1 and the measurement result #2 to the second network element, the second network element performs averaging processing on the measurement result #1 and the measurement result #2, and the second network element determines, based on a result of the averaging processing and the correspondence, whether to adjust the AI model.

In another possible implementation, the measurement result of the first parameter includes measurement results provided by at least two first network elements.

For example, a first network element receives a reference signal, and performs channel measurement based on the reference signal, to obtain a channel measurement result, and obtains a measurement result of a first parameter (denoted as a measurement result #3 for differentiation) based on the channel measurement result; a first network element #2 receives a reference signal, and performs channel measurement based on the reference signal, to obtain a channel measurement result, and obtains a measurement result of the first parameter (denoted as a measurement result #4 for differentiation) based on the channel measurement result; and a first network element #3 receives a reference signal, and performs channel measurement based on the reference signal to obtain a channel measurement result, and obtains a measurement result of the first parameter (denoted as a measurement result #5 for differentiation) based on the channel measurement result. The measurement result #3, the measurement result #4, the measurement result #5, and a correspondence are used to determine whether to adjust an AI model.

The foregoing solution 2 is used as an example. The first network element sends the measurement result #3 to the second network element, the first network element #2 sends the measurement result #4 to the second network element, the first network element #3 sends the measurement result #5 to the second network element, and the second network element determines, based on the measurement result #3, the measurement result #4, the measurement result #5, and the correspondence, whether to adjust the AI model.

In an example, if the second network element determines, based on at least P measurement results, that the AI model needs to be adjusted, the second network element determines that the AI model needs to be adjusted; otherwise, the second network element determines that the AI model does not need to be adjusted. P is an integer greater than or equal to 1. A value of P may be predefined, or may be preconfigured. This is not limited.

For example, the second network element determines, based on the measurement result #3 and the correspondence, whether to adjust the AI model, the second network element determines, based on the measurement result #4 and the correspondence, whether to adjust the AI model, and the second network element determines, based on the measurement result #5 and the correspondence, whether to adjust the AI model. If the second network element determines, based on at least two measurement results, that the AI model needs to be adjusted, the second network element may determine that the AI model needs to be adjusted; otherwise, the second network element determines that the AI model does not need to be adjusted. In this example, a value of P is 2.

It may be understood that, the foregoing descriptions are example descriptions. This is not limited. For example, the second network element may alternatively perform averaging processing on the measurement result #3, the measurement result #4, and the measurement result #5, and the second network element determines, based on a result of the averaging processing and the correspondence, whether to adjust the AI model. For another example, the first network element may alternatively provide a channel measurement result to the second network element, and the second network element obtains a measurement result of a first parameter based on the channel measurement result, and then performs determining.

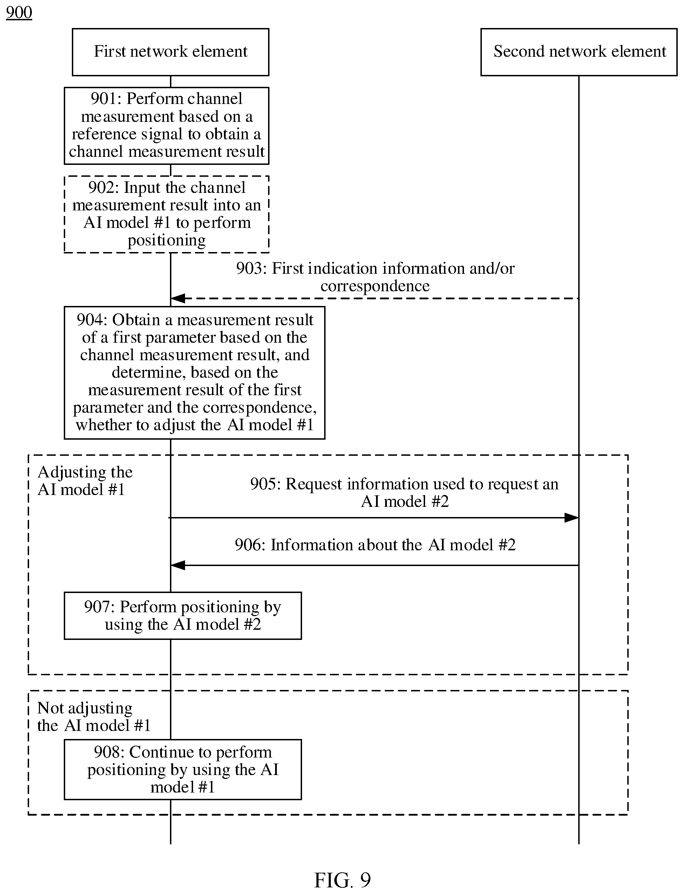

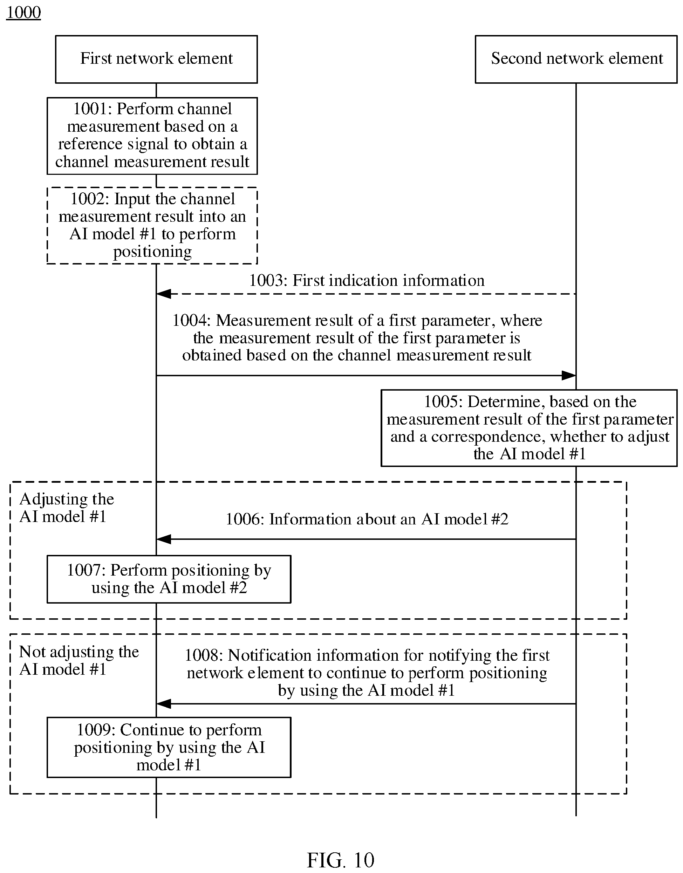

For ease of understanding, the following uses interaction between the first network element and the second network element as an example to describe, with reference to FIG. 9 and FIG. 10, procedures applicable to the foregoing solution 1 and solution 2. For content that is not described in detail below, refer to the descriptions in the method 800. Details are not described below.

FIG. 9 is a schematic flowchart of a communication method 900 according to an embodiment of this application. The method 900 is applicable to the foregoing solution 1, and is applicable to a scenario in which AI model inference is deployed on a side of a first network element, and storage of an AI model library and/or training of an AI model are/is deployed on a side of a second network element. The method 900 shown in FIG. 9 may include the following steps.

901: The first network element performs channel measurement based on a reference signal to obtain a channel measurement result.

In an example, the first network element is a terminal device; or a component, for example, a chip or a circuit, of a terminal device, and the reference signal is a downlink reference signal. In another example, the first network element is a network device or a positioning device; or a component, for example, a chip or a circuit, of a network device or a positioning device, and the reference signal is an uplink reference signal.

For example, assuming that the first network element is a terminal device, and the second network element is a network device or a positioning device, the terminal device may receive a reference signal (for example, a downlink PRS) from the network device, and perform channel measurement based on the reference signal to obtain a channel measurement result.

For another example, assuming that the first network element is a network device, and the second network element is a terminal device, the network device may receive a reference signal (for example, an uplink positioning SRS) from the terminal device, and perform channel measurement based on the reference signal to obtain a channel measurement result.

For another example, assuming that both the first network element and the second network element are terminal devices, the first network element may receive a reference signal (for example, an SL-PRS) from the second network element, and perform channel measurement based on the reference signal to obtain a channel measurement result.

Optionally, the method 900 further includes step 902.

902: The first network element inputs the channel measurement result into an AI model #1 to perform positioning.

In this embodiment of this application, it is assumed that an AI model currently used by the first network element is the AI model #1.

The AI model #1 may be used for direct positioning, or may be used for assisted positioning. For details, refer to the descriptions in the method 800.

Optionally, the method 900 further includes step 903.

903: The second network element sends first indication information and/or a correspondence to the first network element.

For example, the second network element is a network device, a core network device, a positioning device, or a server or a cloud device in an OTT system; or a component, for example, a chip or a circuit, of a network device, a core network device, a positioning device, or a server or a cloud device in an OTT system.

For a related solution of the first indication information and the correspondence, refer to the descriptions in the method 800.

904: The first network element determines a measurement result of a first parameter based on the channel measurement result, and determines, based on the measurement result of the first parameter and the correspondence, whether to adjust the AI model #1.

For example, if the method 900 includes step 903, and the second network element sends the first indication information and the correspondence to the first network element in step 903, the first network element may learn, based on the first indication information, that the measurement result of the first parameter is used to determine whether to adjust the AI model #1. Therefore, the first network element determines the measurement result of the first parameter based on the channel measurement result, and determines, based on the measurement result of the first parameter and the correspondence that is received in step 903, whether to adjust the AI model #1.

For another example, if the method 900 includes step 903, and the second network element sends the first indication information to the first network element in step 903, the first network element may learn, based on the first indication information, that the measurement result of the first parameter is used to determine whether to adjust the AI model #1. Therefore, the first network element determines the measurement result of the first parameter based on the channel measurement result, and determines, based on the measurement result of the first parameter and the correspondence, whether to adjust the AI model #1. The correspondence may be obtained in advance, for example, predefined or preconfigured.

For another example, if the method 900 includes step 903, and the second network element sends the correspondence to the first network element in step 903, the first network element determines, based on the measurement result of the first parameter and the correspondence that is received in step 903, whether to adjust the AI model #1. By default, the first network element may determine, based on a protocol-predefined or pre-stored setting, that the measurement result of the first parameter is used to determine whether to adjust the AI model #1.

For the first parameter and a specific manner in which the first network element determines, based on the measurement result of the first parameter and the correspondence, whether to adjust the AI model, refer to the descriptions in the method 800.

If in step 904, the first network element determines, based on the measurement result of the first parameter and the correspondence, to adjust the AI model #1, for example, adjust the AI model #1 to an AI model #2, in an example, the method 900 further includes steps 905 to 907.

905: The first network element sends, to the second network element, request information used to request the AI model #2.

906: The second network element sends information about the AI model #2 to the first network element.

For example, the second network element sends the AI model #2 to the first network element. For another example, the second network element sends an index of the AI model #2 to the first network element, and the first network element may learn of the AI model #2 based on the index of the AI model #2.

907: The first network element performs positioning by using the AI model #2.

If in step 904, the first network element determines, based on the measurement result of the first parameter and the correspondence, that the AI model #1 does not need to be adjusted, the method 900 further includes step 908, and does not include the foregoing steps 905 to 907.

908: The first network element continues to perform positioning by using the AI model #1.

According to the foregoing technical solution, the first network element may determine, based on an input feature of the AI model, whether the AI model needs to be adjusted. Specifically, after performing channel measurement based on the reference signal, the first network element may obtain the channel measurement result, obtain the measurement result of the first parameter based on the channel measurement result, and determine, based on the measurement result of the first parameter, whether the AI model needs to be adjusted. It is considered that a change of a channel environment may affect positioning precision. For example, the change of the channel environment may cause deterioration of positioning performance when a single AI model is used. Because the measurement result of the first parameter is obtained based on the channel measurement result, the measurement result of the first parameter can reflect a current channel environment. In this way, according to the foregoing solution, the AI model configured on the side of the first network element can be adjusted in a timely manner based on a change of a channel condition, and positioning precision of the AI model can be improved.

FIG. 10 is a schematic flowchart of a communication method 1000 according to another embodiment of this application. The method 1000 is applicable to the foregoing solution 2, and is applicable to a scenario in which AI model inference is deployed on a side of a first network element, and storage of an AI model library and/or training of an AI model are/is deployed on a side of a second network element. The method 1000 shown in FIG. 10 may include the following steps.

1001: The first network element performs channel measurement based on a reference signal to obtain a channel measurement result.

In an example, the first network element is a terminal device; or a component, for example, a chip or a circuit, of a terminal device, and the reference signal is a downlink reference signal. In another example, the first network element is a network device or a positioning device; or a component, for example, a chip or a circuit, of a network device or a positioning device, and the reference signal is an uplink reference signal.

Optionally, the method 1000 further includes step 1002.

1002: The first network element inputs the channel measurement result into an AI model #1 to perform positioning.

For steps 1001 and 1002, refer to steps 901 and 902.

Optionally, the method 1000 further includes step 1003.

1003: The second network element sends first indication information to the first network element.

For example, the second network element is a network device, a core network device, a positioning device, or a server or a cloud device in an OTT system; or a component, for example, a chip or a circuit, of a network device, a core network device, a positioning device, or a server or a cloud device in an OTT system.

For a related solution of the first indication information, refer to the descriptions in the method 800.

1004: The first network element sends a measurement result of a first parameter to the second network element, where the measurement result of the first parameter is obtained based on the channel measurement result.

1005: The second network element determines, based on the measurement result of the first parameter and a correspondence, whether to adjust the AI model #1.

For a specific manner in which the second network element determines, based on the measurement result of the first parameter and the correspondence, whether to adjust the AI model, refer to the descriptions in the method 800.

If in step 1005, the second network element determines, based on the measurement result of the first parameter and the correspondence, to adjust the AI model #1, for example, adjust the AI model #1 to an AI model #2, in an example, the method 1000 further includes steps 1006 and 1007.

1006: The second network element sends information about the AI model #2 to the first network element.

1007: The first network element performs positioning by using the AI model #2.

If in step 1005, the second network element determines, based on the measurement result of the first parameter and the correspondence, that the AI model #1 does not need to be adjusted, optionally, the method 1000 further includes steps 1008 and 1009, and does not include the foregoing steps 1006 and 1007.

1008: The second network element sends, to the first network element, notification information for notifying the first network element to continue to perform positioning by using the AI model #1.

1009: The first network element continues to perform positioning by using the AI model #1.

It may be understood that, the foregoing descriptions are example descriptions. This is not limited. For example, when the second network element determines, based on the measurement result of the first parameter and the correspondence, that the AI model #1 does not need to be adjusted, the second network element does not send, to the first network element, a response to the measurement result of the first parameter. If the first network element does not receive a response from the second network element within a period of time (denoted as a time period #1 for differentiation), the first network element continues to perform positioning by using the AI model #1 by default. For example, a start moment of the time period #1 may be a moment at which the first network element sends the measurement result of the first parameter, and duration of the time period #1 may be predefined, or may be estimated based on a historical situation. This is not limited. For example, the time period #1 may be implemented by using a timer.

According to the foregoing technical solution, the second network element may determine, based on an input feature of the AI model, whether the AI model needs to be adjusted. Specifically, after performing channel measurement based on the reference signal, the first network element obtains the measurement result of the first parameter based on the channel measurement result, and sends the measurement result of the first parameter to the second network element. In this way, the second network element may determine, based on the measurement result of the first parameter, whether the AI model needs to be adjusted. It is considered that a change of a channel environment may affect positioning precision. For example, the change of the channel environment may cause deterioration of positioning performance when a single AI model is used. Because the measurement result of the first parameter is obtained based on the channel measurement result, the measurement result of the first parameter can reflect a current channel environment. In this way, according to the foregoing solution, the AI model configured on the side of the first network element can be adjusted in a timely manner based on a change of a channel condition, and positioning precision of the AI model can be improved.

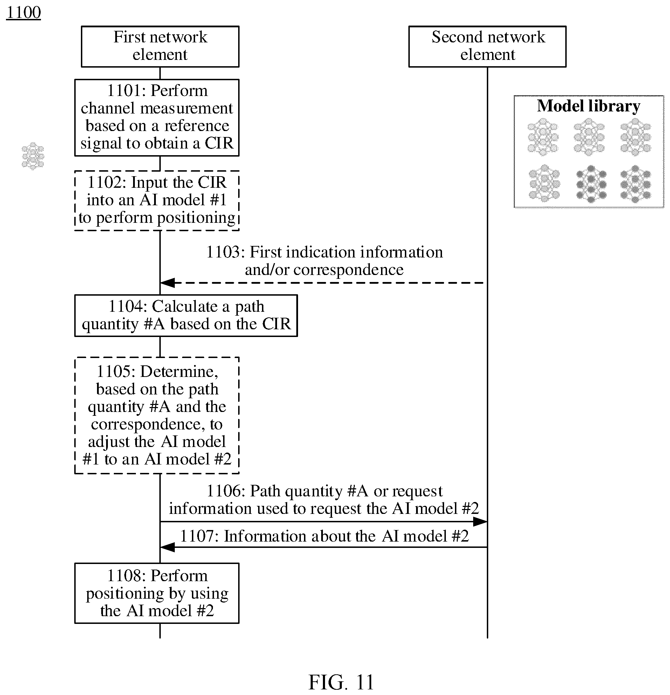

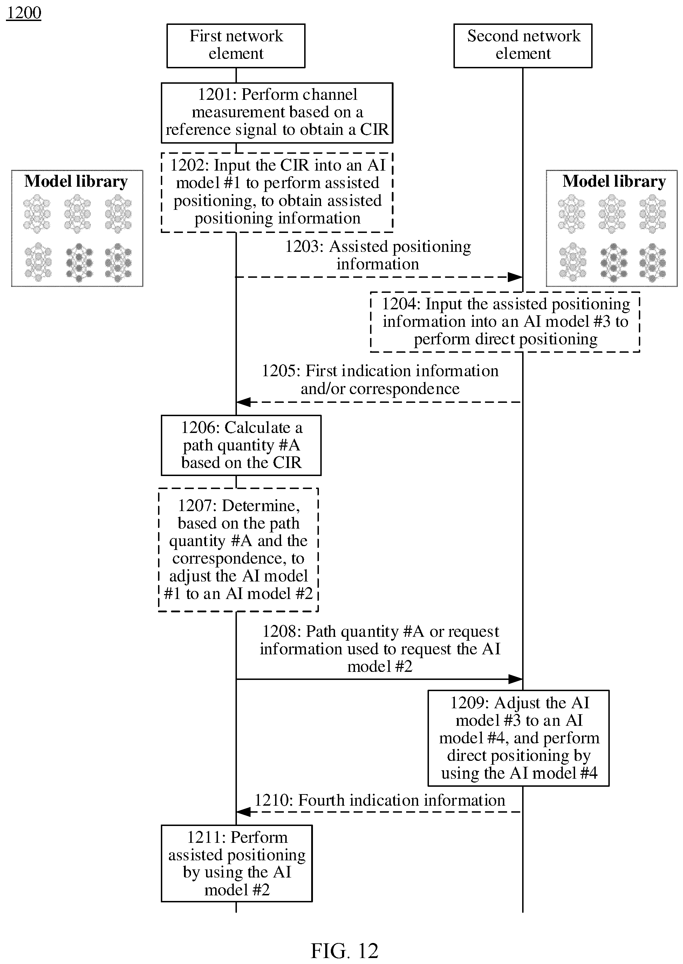

For ease of understanding, in the following descriptions, interaction between the first network element and the second network element is used as an example, and an example in which the first parameter is a path quantity #A (namely, a quantity of paths whose energy is greater than k times energy of a first path in a CIR) is used, to describe a procedure applicable to embodiments of this application with reference to FIG. 11 and FIG. 12. For content that is not described in detail below, refer to the descriptions in the method 800. Details are not described below.

FIG. 11 is a schematic flowchart of a communication method 1100 according to another embodiment of this application. The method 1100 is applicable to a scenario in which AI model inference is deployed on a side of a first network element, and storage of an AI model library and/or training of an AI model are/is deployed on a side of a second network element. The method 1100 shown in FIG. 11 may include the following steps.

1101: The first network element performs channel measurement based on a reference signal to obtain a CIR.

In an example, the first network element is a terminal device; or a component, for example, a chip or a circuit, of a terminal device, and the reference signal is a downlink reference signal. In another example, the first network element is a network device or a positioning device; or a component, for example, a chip or a circuit, of a network device or a positioning device, and the reference signal is an uplink reference signal.

Optionally, the method 1100 further includes step 1102.

1102: The first network element inputs the CIR into an AI model #1 to perform positioning.

Optionally, the method 1100 further includes step 1103.

1103: The second network element sends first indication information and/or a correspondence to the first network element.

The first indication information indicates that a path quantity #A is used to determine whether to adjust the AI model, the first indication information indicates to calculate the path quantity #A, or the first indication information indicates that the path quantity #A reflects a current channel environment (for example, an NLOS degree of a current channel).

For example, the second network element is a network device, a core network device, a positioning device, or a server or a cloud device in an OTT system; or a component, for example, a chip or a circuit, of a network device, a core network device, a positioning device, or a server or a cloud device in an OTT system.

For steps 1101 to 1103, refer to the descriptions in steps 901 to 903.

1104: The first network element calculates the path quantity #A based on the CIR.

Optionally, the method 1100 further includes step 1105.

1105: The first network element determines, based on the path quantity #A and the correspondence, to adjust the AI model #1 to an AI model #2.

The correspondence is a correspondence between an AI model and a path quantity #A.

Table 3 in the method 800 is used as an example. Assuming that the path quantity #A calculated by the first network element is 8, the first network element determines to adjust the AI model #1 to the AI model #2.

In this embodiment of this application, for example, it is assumed that the AI model #1 needs to be adjusted to the AI model #2.

1106: The first network element sends, to the second network element, the path quantity #A or request information used to request the AI model #2.

In a possible case, if the method 1100 includes step 1105, in step 1106, the first network element sends request information to the second network element, where the request information is used to request the AI model #2.

In another possible case, if the method 1100 does not include step 1105, in step 1106, the first network element sends the path quantity #A to the second network element, where the path quantity #A may be used by the second network element to determine whether to adjust the AI model #1.

1107: The second network element sends information about the AI model #2 to the first network element.

In a possible case, if in step 1106, the first network element sends the path quantity #A to the second network element, the second network element determines, based on the path quantity #A and the correspondence, whether to adjust the AI model #1. Assuming that the second network element determines, based on the path quantity #A and the correspondence, that the AI model #1 needs to be adjusted to the AI model #2, the second network element sends the AI model #2 to the first network element.

In another possible case, if in step 1106, the first network element sends, to the second network element, the request information used to request the AI model #2, the second network element sends the AI model #2 to the first network element in response to the request information.

1108: The first network element performs positioning by using the AI model #2.

According to the foregoing technical solution, whether the AI model needs to be adjusted may be determined based on a measurement result of channel measurement, for example, the path quantity #A, and the correspondence. It is considered that a change of a channel environment may affect positioning precision. For example, the change of the channel environment may cause deterioration of positioning performance when a single AI model is used. The path quantity #A can reflect a current channel environment, for example, an NLOS degree. In this way, according to the foregoing solution, the AI model configured on the side of the first network element can be adjusted in a timely manner based on a change of a channel condition, and positioning precision of the AI model can be improved.

FIG. 12 is a schematic flowchart of a communication method 1200 according to another embodiment of this application. The method 1200 is applicable to a scenario in which AI model inference, storage of an AI model library, and/or training of an AI model are deployed on both a side of a first network element and a side of second network element. In the method 1200, a first-type AI model is deployed in the first network element, a second-type AI model is deployed in the second network element, and the first-type AI model and the second-type AI model are jointly used to perform positioning. In other words, a channel measurement result is an input of the first-type AI model, and an output of the first-type AI model is an input of the second-type AI model. The method 1200 shown in FIG. 12 may include the following steps.

1201: The first network element performs channel measurement based on a reference signal to obtain a CIR.

In an example, the first network element is a terminal device; or a component, for example, a chip or a circuit, of a terminal device, and the reference signal is a downlink reference signal. In another example, the first network element is a network device or a positioning device; or a component, for example, a chip or a circuit, of a network device or a positioning device, and the reference signal is an uplink reference signal.

Optionally, the method 1200 further includes steps 1202 to 1204.

1202: The first network element inputs the CIR into an AI model #1 to perform assisted positioning, to obtain assisted positioning information.

For the assisted positioning information, refer to the descriptions in the method 800.

1203: The first network element sends the assisted positioning information to the second network element.

For example, the second network element is a network device, a core network device, a positioning device, or a server or a cloud device in an OTT system; or a component, for example, a chip or a circuit, of a network device, a core network device, a positioning device, or a server or a cloud device in an OTT system.

1204: The second network element inputs the assisted positioning information into an AI model #3 to perform direct positioning.

The AI model #3 may be an AI model used in matching with the AI model #1. For the AI model #3, an input is an output of the AI model #1, and an output is location information of the first network element.

Optionally, the method 1200 further includes step 1205.

1205: The second network element sends first indication information and/or a correspondence to the first network element.

The correspondence may be a correspondence between a first-type AI model and a path quantity #A. The second network element provides the correspondence for the first network element, so that the second network element may determine, based on the correspondence, whether the first-type AI model needs to be adjusted.

1206: The first network element calculates the path quantity #A based on the CIR.

Optionally, the method 1200 further includes step 1207.

1207: The first network element determines, based on the path quantity #A and the correspondence, to adjust the AI model #1 to an AI model #2.

The correspondence includes a correspondence between a first-type AI model and a value of the path quantity #A. Specifically, in step 1207, the first network element determines, based on a measurement result of the path quantity #A and the correspondence between the first-type AI model and the value of the path quantity #A, that the first-type AI model is to be adjusted from the AI model #1 to the AI model #2.

The first network element may locally store the correspondence between the first-type AI model and the value of the path quantity #A, or the first network element may receive the correspondence between the first-type AI model and the value of the path quantity #A from the second network element (for example, step 1205). This is not limited.

1208: The first network element sends, to the second network element, the path quantity #A or request information used to request the AI model #2.

In a possible implementation, if in step 1207, the first network element determines, based on the path quantity #A and the correspondence, to adjust the AI model #1 to the AI model #2, in step 1208, the first network element sends the path quantity #A to the second network element.

In another possible implementation, if in step 1207, the first network element determines, based on the path quantity #A and the correspondence, to adjust the AI model #1 to the AI model #2, in step 1208, the first network element sends, to the second network element, the request information used to request the AI model #2.

1209: The second network element adjusts the AI model #3 to an AI model #4, and performs direct positioning by using the AI model #4.

In a possible implementation, in step 1208, the first network element sends the path quantity #A to the second network element, and the second network element determines, based on a correspondence between a second-type AI model and a value of the path quantity #A, to adjust the AI model #3 to the AI model #4. The second network element may locally store the correspondence between the second-type AI model and the value of the path quantity #A, or the second network element may receive the correspondence between the first-type AI model and the value of the path quantity #A from another network element (for example, the first network element). This is not limited.

In another possible implementation, in step 1208, the first network element sends the request information for the AI model #2 to the second network element, and the second network element adjusts, based on the request information and a matching relationship or a correspondence between an AI model configured in the first network element and an AI model configured in the second network element, the AI model #3 that matches the AI model #1 to the AI model #4 that matches the AI model #2.

Optionally, the method 1200 further includes step 1210.

1210: The second network element sends fourth indication information to the first network element

The fourth indication information indicates that the AI model configured in the second network element is adjusted, or the fourth indication information indicates that the AI model configured in the second network element is to be adjusted from the AI model #3 to the AI model #4.

1211: The first network element performs assisted positioning by using the AI model #2.

In a possible implementation, after receiving the fourth indication information from the first network element, the first network element performs assisted positioning by using the AI model #2.

In another possible implementation, after step 1207 of determining, based on the path quantity #A and the correspondence, to adjust the AI model #1 to an AI model #2, the first network element performs assisted positioning by using the AI model #2.

According to the foregoing technical solution, whether the AI model needs to be adjusted may be determined based on a measurement result of channel measurement, for example, the path quantity #A, and the correspondence. It is considered that a change of a channel environment may affect positioning precision. The path quantity #A can reflect a current channel environment, for example, an NLOS degree. In this way, according to the foregoing solution, the AI model configured on the side of the first network element and the AI model configured on the side of the second network element may be coordinately adjusted in a timely manner based on a change of a channel condition, and positioning precision of the AI model can be improved.

In the foregoing method 1200, an example in which the second network element determines, based on a measurement result that is of a first parameter (for example, the path quantity #A) and that is provided by the first network element, whether the AI model configured in the second network element is to be adjusted is mainly used for description. This is not limited. In another possible implementation, the second network element may determine, based on a measurement result of a second parameter, whether the AI model configured in the second network element is to be adjusted. The measurement result of the second parameter may be assisted positioning information. Based on this implementation, the method 1200 may not include steps 1205 to 1210. Alternatively, further optionally, based on this implementation, if the second network element determines, based on the measurement result of the second parameter and a correspondence, that the AI model #3 needs to be adjusted to the AI model #4, the second network element may further send the fourth indication information to the first network element.

The second parameter may be, for example, one or more of the following: a LOS probability, an AOA, an AoD, a TOA, or a time difference of arrival of the reference signal. There is a correspondence between a value of the second parameter and an AI model. In this way, the second network element may determine, based on the measurement result of the second parameter and the correspondence between the value of the second parameter and the AI model in the second network element, whether the AI model configured in the second network element is to be adjusted. For the correspondence between the value of the second parameter and the AI model in the second network element, refer to Table 1, in other words, the first parameter in Table 1 is replaced with the second parameter. Details are not described herein again.

In the foregoing embodiment, an example in which whether an AI model is to be switched or updated is determined based on an input feature of the AI model is mainly used for description. In this application, it is considered that an intermediate performance indicator of an AI model can also reflect final network performance, for example, network throughput performance, a solution of monitoring the intermediate performance indicator of the AI model is further proposed, to determine, based on a monitoring result of the intermediate performance indicator, whether to switch or update the AI model. The intermediate performance indicator of the AI model, for example, represents an output of an AI model used for assisted positioning. For content that is not described in detail below, refer to the descriptions in the foregoing embodiments.

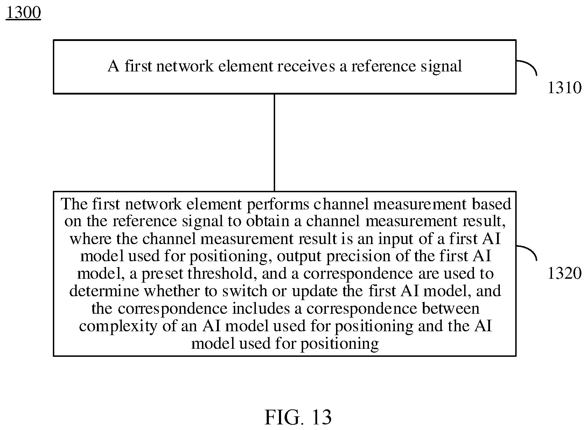

FIG. 13 is a diagram of a communication method 1300 according to an embodiment of this application. The method 1300 shown in FIG. 13 may include the following steps.

1310: A first network element receives a reference signal.

1320: The first network element performs channel measurement based on the reference signal to obtain a channel measurement result, where the channel measurement result is an input of a first AI model used for positioning, output precision of the first AI model, a preset threshold, and a correspondence are used to determine whether to switch or update the first AI model, and the correspondence includes a correspondence between complexity of an AI model used for positioning and the AI model used for positioning.

The preset threshold may indicate expected output precision. The preset threshold may be sent by another network element to the first network element, may be preconfigured, or may be predefined. This is not limited.

For example, the first network element may determine, based on the output precision of the first AI model and the preset threshold, whether the first AI model needs to be adjusted. For example, if the output precision of the first AI model is less than the preset threshold, it is determined to adjust the first AI model to an AI model with higher complexity. Specifically, a specific AI model to which the first AI model is to be adjusted to may be determined based on the correspondence. For another example, if the output precision of the first AI model is greater than or equal to the preset threshold, it is determined that the first AI model does not need to be adjusted.

Optionally, the first AI model is an AI model that is configured in the first network element and that is used for LOS identification, or the first AI model is an AI model that is configured in the first network element and that is used for assisted positioning. In this embodiment of this application, the first AI model and another AI model (for example, an AI model configured in the first network element, or an AI model configured in another network element) may be jointly used to perform positioning. For example, an output of the first AI model may be used as an input of the another AI model, and an output of the another AI model may be location information of the first network element. In this embodiment of this application, it is considered that the output precision of the first AI model affects final positioning precision, and the output precision of the first AI model is related to complexity. For example, higher output precision of the first AI model indicates higher complexity of the first AI model, and an AI model with higher complexity is more adaptive to a complex channel environment. Therefore, whether the first AI model needs to be switched or updated is determined by monitoring the output precision of the first AI model, or the first AI model may be adaptively switched or updated in a timely manner based on a change of a channel condition, to ensure final positioning precision performance.

Optionally, the output of the first AI model includes at least one of the following: a LOS probability, a LOS hard decision result, an angle, and a time. For example, the angle may be an AOA. For example, the time may be a TDoA, or may be a TOA. For example, the output of the AI model is a TOA, and the output precision of the AI model is TOA precision. For example, a value of the TOA precision may be, for example, 5.0 m, 4.0 m, 3.0 m, 2.0 m, 1.0 m, or 0.5 m. For another example, the output of the AI model is a LOS probability or a LOS hard decision result, and the output precision of the AI model is LOS identification accuracy. For example, a value of the LOS identification accuracy may be, for example, 50%, 70%, 80%, 90%, 95%, or 99%.

In an example, the first AI model is an AI model that is configured in the first network element and that is used for LOS identification. In this case, for example, the output of the first AI model may be a LOS identification result (for example, a LOS probability, or a LOS hard decision result).

In another example, the first AI model is an AI model that is configured in the first network element and that is used for assisted positioning. In this case, for example, the output of the first AI model may include but is not limited to at least one of the following: an angle and time. For example, the angle may be an AOA. For example, the time may be a TDoA, or may be a TOA.

Similarly, for ease of description, "adjusting an AI model" represents "switching or updating an AI model" in the following descriptions. In other words, for example, "adjusting an AI model" described below may be replaced with "switching an AI model", or may be replaced with "updating an AI model".

The correspondence includes a correspondence between complexity of an AI model used for positioning and an AI model used for positioning. Generally, AI models have different precision or precision ranges due to different complexity of the AI models, and an AI model with higher complexity is more adaptive to a complex channel environment. Therefore, if precision of a current AI model does not satisfy the preset threshold, it indicates that the current AI model cannot adapt to a current channel environment. In this case, an AI model with higher complexity may be determined based on a correspondence between complexity of an AI model used for positioning and the AI model used for positioning, to adapt to the current channel environment.

In an example, the correspondence may exist, for example, may be stored or transmitted, in a form of a table, a function, a text, or a character string. Table 9 is an example of presenting the correspondence in a form of a table.

Table 9 is used as an example. It is assumed that complexity is increased from a level 1 to a level 6. It is assumed that the first AI model is an AI model #1. If output precision of the AI model #1 is less than the preset threshold, the AI model #1 may be adjusted to an AI model whose complexity level is higher than the level 1, for example, an AI model #2, or any AI model of an AI model #3 to an AI model #6.

Table 9

| Complexity | AI model |
|------------|----------|
| Level 1 | AI model #1 |
| Level 2 | AI model #2 |
| Level 3 | AI model #3 |
| Level 4 | AI model #4 |
| Level 5 | AI model #5 |
| Level 6 | AI model #6 |

Optionally, the first network element receives sixth indication information, where the sixth indication information indicates that the output precision of the first AI model is used to determine whether to adjust the AI model used for positioning. Based on this, the first network element may learn, based on the sixth indication information, that the output precision of the first AI model needs to be monitored, and then determine, based on the output of the first AI model, whether to adjust the AI model. Further, optionally, the sixth indication information includes the preset threshold.

For example, in this embodiment of this application, the determining whether to adjust the first AI model includes the following two solutions.

Solution 1: The first network element determines, based on the output precision of the first AI model, the preset threshold, and the correspondence, whether to adjust the first AI model.

For details, refer to related descriptions in the solution 1 in the method 800. Details are not described herein again.

Solution 2: The first network element sends the output of the first AI model to the second network element, and the second network element determines, based on the output precision of the first AI model, the preset threshold, and the correspondence, whether to adjust the first AI model.

For details, refer to related descriptions in the solution 2 in the method 800. Details are not described herein again.

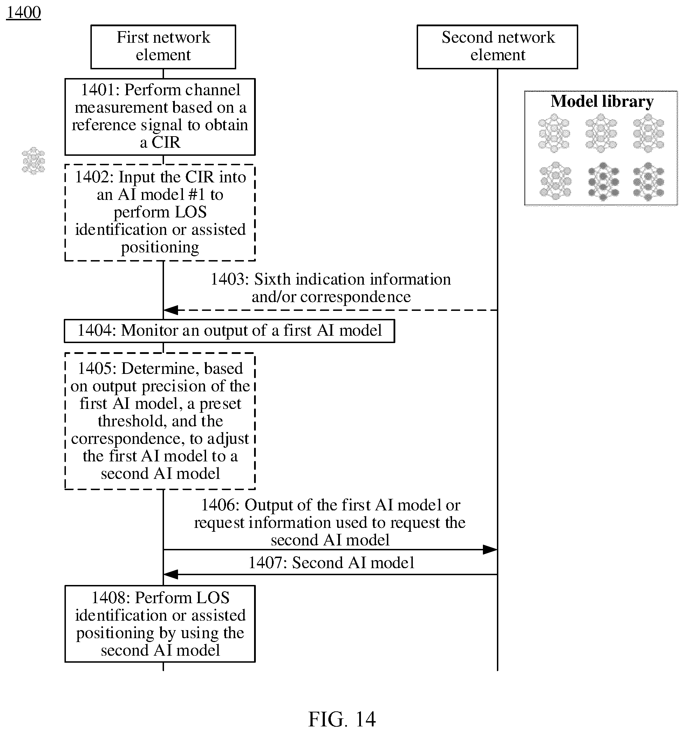

For ease of understanding, the following uses interaction between the first network element and the second network element as an example to describe, with reference to FIG. 14, a procedure applicable to embodiments of this application. For content that is not described in detail below, refer to the descriptions in the method 1300. Details are not described below.

FIG. 14 is a schematic flowchart of a communication method 1400 according to another embodiment of this application. The method 1400 is applicable to a scenario in which AI model inference is deployed on a side of a first network element, and storage of an AI model library and/or training of an AI model are/is deployed on a side of second network element. The method 1400 shown in FIG. 14 may include the following steps.

1401: The first network element performs channel measurement based on a reference signal to obtain a CIR.

In an example, the first network element is a terminal device; or a component, for example, a chip or a circuit, of a terminal device, and the reference signal is a downlink reference signal. In another example, the first network element is a network device or a positioning device; or a component, for example, a chip or a circuit, of a network device or a positioning device, and the reference signal is an uplink reference signal.

Optionally, the method 1400 further includes step 1402.

1402: The first network element inputs the CIR into a first AI model to perform LOS identification or assisted positioning.

For example, if the first network element inputs the CIR into the first AI model to perform LOS identification, the first network element outputs a LOS probability or a LOS hard decision result. For another example, if the first network element inputs the CIR into the first AI model to perform assisted positioning, the first network element outputs an angle or time. For example, the angle may be an AOA. For example, the time may be a TDoA, or may be a TOA.

Optionally, the method 1400 further includes step 1403.

1403: The second network element sends sixth indication information and/or a correspondence to the first network element.

The sixth indication information indicates that output precision of the first AI model is used to determine whether to adjust the AI model used for positioning.

Optionally, the sixth indication information includes a preset threshold. In this case, that the sixth indication information indicates that output precision of the first AI model is used to determine whether to adjust the AI model used for positioning may be replaced with that the sixth indication information indicates that the AI model used for positioning is adjusted when the output precision of the first AI model is less than the preset threshold.

For example, the second network element is a network device, a core network device, a positioning device, or a server or a cloud device in an OTT system; or a component, for example, a chip or a circuit, of a network device, a core network device, a positioning device, or a server or a cloud device in an OTT system.

1404: The first network element monitors an output of the first AI model.

Optionally, the method 1400 further includes step 1405.

1405: The first network element determines, based on the output precision of the first AI model, the preset threshold, and the correspondence, to adjust the first AI model to a second AI model.

In this embodiment of this application, for example, it is assumed that the first AI model needs to be adjusted to the second AI model.

1406: The first network element sends, to the second network element, the output of the first AI model or request information used to request the second AI model.

In a possible case, if the method 1400 includes step 1405, in step 1406, the first network element sends request information to the second network element, where the request information is used to request the second AI model.

In another possible case, if the method 1400 does not include step 1405, in step 1406, the first network element sends the output of the first AI model to the second network element, where the output of the first AI model may be used by the second network element to determine whether to adjust the first AI model.

1407: The second network element sends information about the second AI model to the first network element.

In a possible case, if the first network element sends the output of the first AI model to the second network element in step 1406, the second network element determines, based on the output precision of the first AI model, the preset threshold, and the correspondence, whether to adjust the first AI model. It is assumed that the second network element determines, based on the output precision of the first AI model, the preset threshold, and the correspondence, that the first AI model needs to be adjusted to the second AI model. In this case, the second network element sends the second AI model to the first network element.

In another possible case, if in step 1406, the first network element sends, to the second network element, the request information used to request the second AI model, the second network element sends the second AI model to the first network element in response to the request information.

1408: The first network element performs LOS identification or assisted positioning by using the second AI model.

It may be understood that FIG. 14 is mainly described by using an example in which the first AI model configured in the first network element is adjusted. For example, if the first AI model is adjusted to the second AI model, another AI model that is jointly used with the first AI model to perform positioning may also be adjusted to an AI model that matches the second AI model. For details, refer to the embodiment shown in FIG. 12. Details are not described herein again.

According to the foregoing technical solution, based on the output of the AI model used for LOS identification or the AI model used for assisted positioning and the correspondence, whether the AI model needs to be adjusted may be determined, or the AI model may be switched or updated in a timely manner, to adapt to a change of a use environment of the AI model. This helps reduce or avoid impact on performance of a network on which the AI model is deployed.

It may be understood that some optional features in embodiments of this application may be independent of other features in some scenarios, or may be combined with other features in some scenarios. This is not limited.

It may be further understood that, in some of the foregoing embodiments, sending information is mentioned for a plurality of times. For example, A sends information to B. That A sends information to B may include that A directly sends the information to B, or may include that A sends the information to B through another device or network element. This is not limited.

It may be further understood that, in some of the foregoing embodiments, adjusting the AI model may be replaced with switching or updating the AI model.

It may be further understood that in some of the foregoing embodiments, an example in which the AI model is an AI model used for positioning is mainly used for description. It may be understood that the AI model may also be used for another purpose.

It may be further understood that the solutions in embodiments of this application may be appropriately combined for use, and explanations or descriptions of terms in embodiments may be mutually referenced or explained in embodiments. This is not limited.

It may be further understood that, in the foregoing method embodiments, the method and the operation implemented by the network element may alternatively be implemented by a component (such as a chip or a circuit) of the network element. This is not limited.

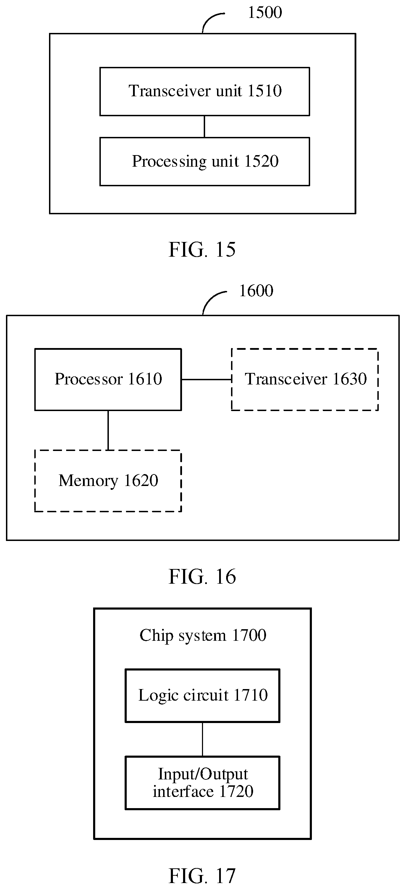

The foregoing describes in detail the methods provided in embodiments of this application with reference to FIG. 8 to FIG. 14. The following describes in detail apparatuses provided in embodiments of this application with reference to FIG. 15 to FIG. 17. It should be understood that descriptions of apparatus embodiments correspond to the descriptions of the method embodiments. Therefore, for content that is not described in detail, refer to the foregoing method embodiments. For brevity, details are not described herein again.

FIG. 15 is a diagram of a communication apparatus 1500 according to an embodiment of this application. The apparatus 1500 includes a transceiver unit 1510 and a processing unit 1520. The transceiver unit 1510 may be configured to implement a corresponding communication function. The transceiver unit 1510 may alternatively be referred to as a communication interface or a communication unit. The processing unit 1520 may be configured to perform processing, for example, determine whether to adjust an AI model.

Optionally, the apparatus 1500 may further include a storage unit. The storage unit may be configured to store instructions and/or data. The processing unit 1520 may read the instructions and/or the data in the storage unit, so that the apparatus implements the foregoing method embodiments.

In a design, the apparatus 1500 is configured to perform the steps or procedures performed by the first network element in the foregoing method embodiments, the transceiver unit 1510 is configured to perform the receiving and sending-related operations on the side of the first network element in the foregoing method embodiments, and the processing unit 1520 is configured to perform the processing-related operation on the side of the first network element in the foregoing method embodiments.

In a possible implementation, the apparatus 1500 is configured to perform the steps or the procedures performed by the first network element in the embodiments shown in FIG. 8 to FIG. 12. Optionally, the transceiver unit 1510 is configured to receive a reference signal; and the processing unit 1520 is configured to perform channel measurement based on the reference signal to obtain a channel measurement result, where the channel measurement result or assisted positioning information based on the channel measurement result is an input of an artificial intelligence AI model used for positioning, a measurement result of a first parameter and a correspondence are used to determine whether to switch or update the AI model, the measurement result of the first parameter is obtained based on the channel measurement result, and the correspondence includes a correspondence between an AI model used for positioning and a value of the first parameter.

In another possible implementation, the apparatus 1500 is configured to perform the steps or procedures performed by the second network element in the embodiments shown in FIG. 8, FIG. 10, FIG. 11, and FIG. 12. Optionally, the transceiver unit 1510 is configured to receive a measurement result of a first parameter, where the measurement result of the first parameter is based on a channel measurement result, and the channel measurement result or assisted positioning information based on the channel measurement result is an input of an artificial intelligence AI model used for positioning. The processing unit 1520 is configured to determine, based on the measurement result of the first parameter and a correspondence, whether to switch or update the AI model, where the correspondence includes a correspondence between an AI model used for positioning and a value of the first parameter.

In another possible implementation, the apparatus 1500 is configured to perform the steps or procedures performed by the second network element in the embodiments shown in FIG. 8, FIG. 9, FIG. 11, and FIG. 12. Optionally, the transceiver unit 1510 is configured to send first indication information and/or a correspondence, where the correspondence includes a correspondence between an artificial intelligence AI model used for positioning and a value of a first parameter, a measurement result of the first parameter is obtained based on a channel measurement result, the channel measurement result or assisted positioning information based on the channel measurement result is an input of the AI model, and the first indication information indicates that the first parameter is used to determine whether to switch or update the AI model used for positioning.

In another possible implementation, the apparatus 1500 is configured to perform the steps or the procedures performed by the first network element in the embodiments shown in FIG. 13 and FIG. 14. Optionally, the transceiver unit 1510 is configured to receive a reference signal; and the processing unit 1520 is configured to perform channel measurement based on the reference signal to obtain a channel measurement result, where the channel measurement result or assisted positioning information based on the channel measurement result is an input of a first AI model used for positioning; and output precision of the first AI model, a preset threshold, and a correspondence are used to determine whether to switch or update the first AI model, and the correspondence includes a correspondence between complexity of an AI model used for positioning and the AI model used for positioning.

In another possible implementation, the apparatus 1500 is configured to perform the steps or procedures performed by the second network element in the embodiments shown in FIG. 13 and FIG. 14. Optionally, the transceiver unit 1510 is configured to receive an output of a first AI model, where an input of the first AI model is a channel measurement result. The processing unit 1520 is configured to determine, based on output precision of the first AI model, a preset threshold, and a correspondence, whether to switch or update the AI model, where the correspondence includes a correspondence between complexity of an AI model used for positioning and the AI model used for positioning.

It should be understood that a specific process in which the units perform the foregoing corresponding steps is described in detail in the foregoing method embodiments, and for brevity, details are not described herein.

It should be understood that the apparatus 1500 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1500 may be specifically the network element (for example, the first network element or the second network element) in the foregoing embodiments, and may be configured to perform procedures and/or steps corresponding to the network element in the foregoing method embodiments. To avoid repetition, details are not described herein again.

The apparatus 1500 in each of the foregoing solutions has a function of implementing corresponding steps performed by the network element (for example, the first network element or the second network element) in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter machine, and a receiving unit in the transceiver unit may be replaced by a receiver machine), and another unit, for example, the processing unit, may be replaced by a processor, to separately perform the sending and receiving operations and the related processing operation in the method embodiments.

In addition, the transceiver unit 1510 may alternatively be a transceiver circuit (for example, may include a receiving circuit and a sending circuit), and the processing unit may be a processing circuit.

It should be noted that the apparatus in FIG. 15 may be the network element in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 16 is a diagram of another communication apparatus 1600 according to an embodiment of this application. The apparatus 1600 includes a processor 1610. The processor 1610 is coupled to a memory 1620. The memory 1620 is configured to store a computer program or instructions and/or data. The processor 1610 is configured to execute the computer program or the instructions stored in the memory 1620, or read data stored in the memory 1620, to perform the methods in the foregoing method embodiments.

Optionally, there are one or more processors 1610.

Optionally, there are one or more memories 1620.

Optionally, the memory 1620 may be integrated with the processor 1610, or the memory 1620 and the processor 1610 are separately disposed.

Optionally, as shown in FIG. 16, the apparatus 1600 may further include a transceiver 1630, and the transceiver 1630 is configured to receive and/or send a signal. For example, the processor 1610 is configured to control the transceiver 1630 to receive and/or send the signal.

For example, the processor 1610 may have a function of the processing unit 1520 shown in FIG. 15, the memory 1620 may have a function of the storage unit, and the transceiver 1630 may have a function of the transceiver unit 1510 shown in FIG. 15.

In a solution, the apparatus 1600 is configured to implement the operations performed by the network element (for example, the first network element or the second network element) in the foregoing method embodiments.

For example, the processor 1610 is configured to execute the computer program or the instructions stored in the memory 1620, to implement related operations of the network element (for example, the first network element or the second network element) in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 17 is a diagram of a chip system 1700 according to an embodiment of this application. The chip system 1700 (or may be referred to as a processing system) includes a logic circuit 1710 and an input/output interface (input/output interface) 1720.

The logic circuit 1710 may be a processing circuit in the chip system 1700. The logic circuit 1710 may be coupled to and connected to a storage unit, and invoke instructions in the storage unit, to enable the chip system 1700 to implement the methods and functions in embodiments of this application. The input/output interface 1720 may be an input/output circuit in the chip system 1700, and outputs information processed by the chip system 1700, or inputs to-be-processed data or signaling information into the chip system 1700 for processing.

Specifically, for example, if the chip system 1700 is installed on a first network element, the logic circuit 1710 is coupled to the input/output interface 1720, and the input/output interface 1720 may input a reference signal into the logic circuit 1710 for processing, for example, perform channel measurement on the reference signal to obtain a measurement result of a first parameter. For another example, if the chip system 1700 is installed on a second network element, the logic circuit 1710 is coupled to the input/output interface 1720, and the input/output interface 1720 may input a measurement result of a first parameter from a first network element into the logic circuit 1710 for processing.

In a solution, the chip system 1700 is configured to implement the operations performed by the network element (for example, the first network element or the second network element) in the foregoing method embodiments.

For example, the logic circuit 1710 is configured to implement the processing-related operation performed by the network element (for example, the first network element or the second network element) in the foregoing method embodiments, and the input/output interface 1720 is configured to implement the sending-related operation and/or receiving-related operation performed by the network element (for example, the first network element or the second network element) in the foregoing method embodiments.

An embodiment of this application further provides a computer-readable storage medium. The computer-readable storage medium stores computer instructions for implementing the method performed by the network element (for example, the first network element or the second network element) in the foregoing method embodiments.

For example, when a computer program is executed by a computer, the computer is enabled to implement the method performed by the network element (for example, the first network element or the second network element) in the foregoing method embodiments.

An embodiment of this application further provides a computer program product, including instructions. When the instructions are executed by a computer, the method performed by the network element (for example, the first network element or the second network element) in the foregoing method embodiments is implemented.

An embodiment of this application further provides a communication system. The communication system includes the first network element and/or the second network element in the foregoing embodiments. For example, the system includes the first network element and/or the second network element in the embodiment shown in FIG. 8. For another example, the system includes the first network element and/or the second network element in the embodiments shown in FIG. 8 to FIG. 12.

For explanations and beneficial effects of related content in any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A communication method, comprising:

    receiving, by a first network element, a reference signal; and
    performing, by the first network element, channel measurement based on the reference signal to obtain a channel measurement result, wherein the channel measurement result or assisted positioning information based on the channel measurement result is an input of an artificial intelligence AI model used for positioning, a measurement result of a first parameter and a correspondence are used to determine whether to switch or update the AI model, the measurement result of the first parameter is obtained based on the channel measurement result, and the correspondence comprises a correspondence between an AI model used for positioning and a value of the first parameter.

2.  The method according to claim 1, wherein the method further comprises:
    receiving, by the first network element, first indication information and/or the correspondence, wherein the first indication information indicates that the first parameter is used to determine whether to switch or update the AI model used for positioning.

3.  The method according to claim 1 or 2, wherein the method further comprises:
    determining, by the first network element based on the measurement result of the first parameter and the correspondence, whether to switch or update the AI model.

4.  The method according to claim 3, wherein the determining, by the first network element based on the measurement result of the first parameter and the correspondence, whether to switch or update the AI model comprises:

    determining, by the first network element based on the measurement result of the first parameter and the correspondence, that a first-type AI model used for positioning is to be switched or updated from a first AI model to a second AI model, wherein the channel measurement result is an input of the first-type AI model used for positioning, and the correspondence comprises a correspondence between the first-type AI model used for positioning and a value of the first parameter; and
    the method further comprises:

        sending, by the first network element, request information, wherein the request information is used to request the second AI model;
        receiving, by the first network element, a response to the request information, wherein the response to the request information comprises information about the second AI model; and
        performing, by the first network element, positioning by using the second AI model.

5.  The method according to claim 3, wherein the determining, by the first network element based on the measurement result of the first parameter and the correspondence, whether to switch or update the AI model comprises:

    determining, by the first network element based on the measurement result of the first parameter and the correspondence, that a second-type AI model used for positioning is to be switched or updated from a third AI

**EP 4 611 403 A1**

model to a fourth AI model, wherein the channel measurement result is an input of a first-type AI model used for positioning, the assisted positioning information is an output of the first-type AI model, the first-type AI model is switched or updated from a first AI model corresponding to the third AI model to a second AI model corresponding to the fourth AI model, the output of the first-type AI model used for positioning is an input of the second-type AI model used for positioning, and the correspondence comprises a correspondence between the second-type AI model used for positioning and a value of the first parameter; and

sending, by the first network element, second indication information, wherein the second indication information indicates that the second-type AI model used for positioning is to be switched or updated from the third AI model to the fourth AI model.

6. The method according to claim 1 or 2, wherein the method further comprises:
   sending, by the first network element, the measurement result of the first parameter.

7. The method according to claim 6, wherein the sending, by the first network element, the measurement result of the first parameter comprises:
   when the measurement result of the first parameter meets a specified condition, sending, by the first network element, the measurement result of the first parameter.

8. The method according to claim 6 or 7, wherein the method further comprises:

   receiving, by the first network element, third indication information, wherein the third indication information indicates that a first-type AI model used for positioning is to be switched or updated from a first AI model to a second AI model; and
   performing, by the first network element, positioning by using the second AI model.

9. The method according to claim 8, wherein the third indication information comprises information about the second AI model.

10. The method according to claim 6 or 7, wherein the method further comprises:
    receiving, by the first network element, fourth indication information, wherein the fourth indication information indicates that a second-type AI model used for positioning is to be switched or updated from a third AI model to a fourth AI model.

11. The method according to any one of claims 1 to 10, wherein the first parameter comprises at least one of the following: a timing error group, an inter-site synchronization error, a delay spread, a quantity of paths whose energy is greater than k times energy of a first path in a channel impulse response, an average power of a plurality of sampling points, a line-of-sight probability, a signal to interference plus noise ratio, a reference signal received power, a Rician factor, a Doppler frequency, a Doppler shift, or a moving speed of the first network element, wherein k is a number greater than 0.

12. The method according to claim 4, 5, 8, or 9, wherein the first-type AI model used for positioning is an AI model used for positioning that is configured in the first network element.

13. The method according to claim 5 or 10, wherein the second-type AI model used for positioning is an AI model used for positioning that is configured in a second network element.

14. A communication method, comprising:

    receiving, by a second network element, a measurement result of a first parameter, wherein the measurement result of the first parameter is based on a channel measurement result, and the channel measurement result or assisted positioning information based on the channel measurement result is an input of an artificial intelligence AI model used for positioning; and
    determining, by the second network element based on the measurement result of the first parameter and a correspondence, whether to switch or update the AI model, wherein the correspondence comprises a correspondence between an AI model used for positioning and a value of the first parameter.

15. The method according to claim 14, wherein the determining, by the second network element based on the measurement result of the first parameter and a correspondence, whether to switch or update the AI model comprises:

determining, by the second network element based on the measurement result of the first parameter and the correspondence, that a first-type AI model used for positioning is to be switched or updated from a first AI model to a second AI model, wherein the channel measurement result is an input of the first-type AI model used for positioning, and the correspondence comprises a correspondence between the first-type AI model used for positioning and a value of the first parameter; and
the method further comprises:
sending, by the second network element, third indication information, wherein the third indication information indicates that the first-type AI model used for positioning is to be switched or updated from the first AI model to the second AI model.

16. The method according to claim 14, wherein the determining, by the second network element based on the measurement result of the first parameter and a correspondence, whether to switch or update the AI model comprises:

determining, by the second network element based on the measurement result of the first parameter and the correspondence, that a second-type AI model used for positioning is to be switched or updated from a third AI model to a fourth AI model, wherein the channel measurement result is an input of a first-type AI model used for positioning, the assisted positioning information is an output of the first-type AI model, the first-type AI model is switched or updated from a first AI model corresponding to the third AI model to a second AI model corresponding to the fourth AI model, the output of the first-type AI model used for positioning is an input of the second-type AI model used for positioning, and the correspondence comprises a correspondence between the second-type AI model used for positioning and a value of the first parameter; and
performing, by the second network element, positioning by using the fourth AI model.

17. The method according to claim 16, wherein the method further comprises:
sending, by the second network element, fourth indication information, wherein the fourth indication information indicates that the second-type AI model used for positioning is to be switched or updated from the third AI model to the fourth AI model.

18. The method according to any one of claims 14 to 17, wherein the method further comprises: sending, by the second network element, first indication information, wherein the first indication information indicates that the first parameter is used to determine whether to switch or update the AI model used for positioning.

19. The method according to claim 18, wherein the first parameter comprises at least one of the following: a timing error group, an inter-site synchronization error, a delay spread, a quantity of paths whose energy is greater than k times energy of a first path in a channel impulse response, an average power of a plurality of sampling points, a line-of-sight probability, a signal to interference plus noise ratio, a reference signal received power, a Rician factor, a Doppler frequency, a Doppler shift, or a moving speed of a first network element, wherein k is a number greater than 0.

20. The method according to any one of claims 15 to 17, wherein the first-type AI model used for positioning is an AI model used for positioning that is configured in the first network element.

21. The method according to any one of claims 15 to 17 or 20, wherein the second-type AI model used for positioning is an AI model used for positioning that is configured in the second network element.

22. A communication method, comprising:
sending, by a second network element, first indication information and/or a correspondence, wherein the correspondence comprises a correspondence between an artificial intelligence AI model used for positioning and a value of a first parameter, a measurement result of the first parameter is based on a channel measurement result, the channel measurement result or assisted positioning information based on the channel measurement result is an input of the AI model, and the first indication information indicates that the first parameter is used to determine whether to switch or update the AI model used for positioning.

23. The method according to claim 22, wherein the method further comprises:

receiving, by the second network element, request information, wherein the request information is used to request a second AI model; and
sending, by the second network element, a response to the request information, wherein the response to the request information comprises information about the second AI model.

24. The method according to claim 22, wherein the method further comprises:

receiving, by the second network element, second indication information, wherein the second indication information indicates that a second-type AI model used for positioning is to be switched or updated from a third AI model to a fourth AI model, the channel measurement result is an input of a first-type AI model used for positioning, the assisted positioning information is an output of the first-type AI model, the first-type AI model is switched or updated from a first AI model corresponding to the third AI model to a second AI model corresponding to the fourth AI model, the output of the first-type AI model used for positioning is an input of the second-type AI model used for positioning, and the correspondence comprises a correspondence between the second-type AI model used for positioning and a value of the first parameter; and
performing, by the second network element based on the second indication information, positioning by using the fourth AI model.

25. A communication method, comprising:

receiving, by a second network element, a measurement result of a second parameter from a first network element, wherein the measurement result of the second parameter comprises a measurement result obtained based on an output of an artificial intelligence AI model configured in the first network element; and
determining, by the second network element based on the measurement result of the second parameter and a correspondence, whether an AI model used for positioning that is configured in the second network element is to be switched or updated, wherein the correspondence comprises a correspondence between an AI model used for positioning and a value of the second parameter.

26. The method according to claim 25, wherein the second parameter comprises at least one of the following: a timing error group, an inter-site synchronization error, a delay spread, a quantity of paths whose energy is greater than k times energy of a first path in a channel impulse response, an average power of a plurality of sampling points, a line-of-sight probability, a signal to interference plus noise ratio, a reference signal received power, a Rician factor, a Doppler frequency, a Doppler shift, or a moving speed of the first network element, wherein k is a number greater than 0.

27. The method according to claim 25 or 26, wherein the determining, by the second network element based on the measurement result of the second parameter and a correspondence, whether an AI model used for positioning that is configured in the second network element is to be switched or updated comprises:
determining, by the second network element based on the measurement result of the second parameter and the correspondence, that the AI model used for positioning that is configured in the second network element is to be switched or updated from a third AI model to a fourth AI model; and sending, by the second network element, fifth indication information, wherein the fifth indication information indicates that the AI model used for positioning that is configured in the second network element is to be switched or updated from the third AI model to the fourth AI model.

28. A communication method, comprising:

receiving, by a first network element, a reference signal; and
performing, by the first network element, channel measurement based on the reference signal, to obtain a channel measurement result, wherein the channel measurement result is an input of a first artificial intelligence AI model used for positioning; and output precision of the first AI model, a preset threshold, and a correspondence are used to determine whether to switch or update the first AI model, and the correspondence comprises a correspondence between complexity of an AI model used for positioning and the AI model used for positioning.

29. The method according to claim 28, wherein the first AI model is an AI model that is configured in the first network element and that is used for assisted positioning, or the first AI model is an AI model that is configured in the first network element and that is used for LOS identification.

30. The method according to claim 28 or 29, wherein the method further comprises:
receiving, by the first network element, sixth indication information and/or the correspondence, wherein the sixth indication information indicates that the output precision of the first AI model is used to determine whether to switch or update the AI model used for positioning.

31. The method according to claim 28 or 29, wherein the method further comprises:
determining, by the first network element based on the output precision of the first AI model, the preset threshold, and the correspondence, whether to switch or update the first AI model.

32. The method according to claim 31, wherein the determining, by the first network element based on the output precision of the first AI model, the preset threshold, and the correspondence, whether to switch or update the first AI model comprises:

determining, by the first network element based on the output precision of the first AI model, the preset threshold, and the correspondence, to switch or update the first AI model to a second AI model; and
the method further comprises: sending, by the first network element, request information, wherein the request information is used to request the second AI model;
receiving, by the first network element, a response to the request information, wherein the response to the request information comprises information about the second AI model; and
performing, by the first network element, positioning by using the second AI model.

33. The method according to any one of claims 28 to 32, wherein the method further comprises:
sending, by the first network element, an output of the first AI model.

34. The method according to claim 33, wherein the sending, by the first network element, an output of the first AI model comprises:
when the output of the first AI model meets a specified condition, sending, by the first network element, the output of the first AI model.

35. The method according to claim 33 or 34, wherein the output of the first AI model comprises at least one of the following: a line-of-sight probability, a line-of-sight hard decision result, an angle, and time.

36. A communication method, comprising:

receiving, by a second network element, an output of a first artificial intelligence AI model used for positioning, wherein an input of the first AI model is a channel measurement result; and
determining, by the second network element based on output precision of the first AI model, a preset threshold, and a correspondence, whether to switch or update the AI model, wherein the correspondence comprises a correspondence between complexity of an AI model used for positioning and the AI model used for positioning.

37. The method according to claim 36, wherein the first AI model is an AI model used for positioning and/or an AI model used for assisted positioning that are/is configured in the first network element.

38. The method according to claim 36 or 37, wherein the determining, by the second network element based on output precision of the first AI model, a preset threshold, and a correspondence, whether to switch or update the AI model comprises:

determining, by the second network element based on the output precision of the first AI model, the preset threshold, and the correspondence, to switch or update the first AI model to a second AI model; and
the method further comprises: sending, by the second network element, third indication information, wherein the third indication information indicates to switch or update the first AI model to the second AI model.

39. The method according to claim 38, wherein the third indication information comprises information about the second AI model.

40. The method according to any one of claims 36 to 39, wherein the method further comprises:
sending, by the second network element, sixth indication information, wherein the sixth indication information indicates that the output precision of the first AI model is used to determine whether to switch or update the AI model used for positioning.

41. The method according to any one of claims 36 to 40, wherein the output of the first AI model comprises at least one of the following: a line-of-sight probability, a line-of-sight hard decision result, an angle, and time.

42. A communication apparatus, comprising a module or unit configured to perform the method according to any one of claims 1 to 41.

43. A communication apparatus, comprising a processor, wherein the processor is configured to execute a computer program or instructions stored in a memory, to enable the apparatus to perform the method according to any one of claims 1 to 41.

44. The apparatus according to claim 43, wherein the apparatus further comprises the memory and/or a communication interface, and the communication interface is coupled to the processor; and
the communication interface is configured to: input and/or output information.

45. The apparatus according to any one of claims 42 to 44, wherein the apparatus is a communication device, a circuit, or a chip.

46. A computer-readable storage medium, wherein the computer-readable storage medium stores a computer program or instructions; and when the computer program is run or the instructions are run on a communication apparatus, the communication apparatus is enabled to perform the method according to any one of claims 1 to 41.

47. A computer program product, wherein the computer program product comprises a computer program or instructions for performing the method according to any one of claims 1 to 41.

48. A communication system, comprising a first network element and a second network element, wherein

the first network element is configured to perform the method according to any one of claims 1 to 13; and
the second network element is configured to perform the method according to any one of claims 14 to 21, the second network element is configured to perform the method according to any one of claims 22 to 24, or the second network element is configured to perform the method according to any one of claims 25 to 27.

49. A communication system, comprising a first network element and a second network element, wherein

the first network element is configured to perform the method according to any one of claims 28 to 35; and
the second network element is configured to perform the method according to any one of claims 36 to 41.

FIG. 1

FIG. 2

$W_0 * X_0$

$W_1 * X_1$

Neuron

$y = f \left( \sum_{i=0}^{n} W_i * X_i + b \right)$

$W_n * X_n$

y

FIG. 3

Layer   Weight

Neuron

Input
layer

Hidden
layer

Output
layer

FIG. 4

FIG. 5

FIG. 6

FIG. 7

800

A first network element receives a reference signal

810

The first network element performs channel measurement based on the reference signal to obtain a channel measurement result, where the channel measurement result or assisted positioning information based on the channel measurement result is an input of an AI model used for positioning, a measurement result of a first parameter and a correspondence are used to determine whether to switch or update the AI model, and the measurement result of the first parameter is obtained based on the channel measurement result

820

FIG. 8

900

```
┌─────────────────────────┐                              ┌──────────────────────────┐
│   First network element  │                              │  Second network element  │
└─────────────────────────┘                              └──────────────────────────┘
          │                                                            │
┌─────────────────────────┐                                           │
│ 901: Perform channel     │                                           │
│ measurement based on a   │                                           │
│ reference signal to obtain a │                                       │
│ channel measurement result│                                          │
└─────────────────────────┘                                           │
┌ ─ ─ ─ ─ ─ ─ ─ ─ ─ ─ ─ ─ ┐                                           │
│ 902: Input the channel   │                                           │
│ measurement result into an│                                          │
│   AI model #1 to perform │                                           │
│        positioning       │                                           │
└ ─ ─ ─ ─ ─ ─ ─ ─ ─ ─ ─ ─ ┘                                           │
          │        903: First indication information and/or           │
          │                     correspondence                        │
          │◄─ ─ ─ ─ ─ ─ ─ ─ ─ ─ ─ ─ ─ ─ ─ ─ ─ ─ ─ ─ ─ ─ ─ ─ ─ ─ ─ ─ │
┌─────────────────────────┐                                           │
│ 904: Obtain a measurement result │                                  │
│ of a first parameter based on the │                                 │
│ channel measurement result, and  │                                  │
│ determine, based on the          │                                  │
│ measurement result of the first  │                                  │
│ parameter and the correspondence,│                                  │
│ whether to adjust the AI model #1│                                  │
└─────────────────────────┘                                           │
```

FIG. 9

1000

| First network element | | Second network element |

1001: Perform channel measurement based on a reference signal to obtain a channel measurement result

1002: Input the channel measurement result into an AI model #1 to perform positioning

1003: First indication information

1004: Measurement result of a first parameter, where the measurement result of the first parameter is obtained based on the channel measurement result

1005: Determine, based on the measurement result of the first parameter and a correspondence, whether to adjust the AI model #1

Adjusting the AI model #1

1006: Information about an AI model #2

1007: Perform positioning by using the AI model #2

Not adjusting the AI model #1

1008: Notification information for notifying the first network element to continue to perform positioning by using the AI model #1

1009: Continue to perform positioning by using the AI model #1

FIG. 10

1100

| First network element | | Second network element |
|---|---|---|

**1101: Perform channel measurement based on a reference signal to obtain a CIR**

**Model library**

1102: Input the CIR into an AI model #1 to perform positioning

1103: First indication information and/or correspondence

**1104: Calculate a path quantity #A based on the CIR**

1105: Determine, based on the path quantity #A and the correspondence, to adjust the AI model #1 to an AI model #2

1106: Path quantity #A or request information used to request the AI model #2

1107: Information about the AI model #2

**1108: Perform positioning by using the AI model #2**

FIG. 11

1200

First network
element

Second network
element

1201: Perform channel
measurement based on a
reference signal to obtain a CIR

**Model library**

1202: Input the CIR into an AI
model #1 to perform assisted
positioning, to obtain assisted
positioning information

**Model library**

1203: Assisted positioning
information

1204: Input the assisted positioning
information into an AI model #3 to
perform direct positioning

1205: First indication information
and/or correspondence

1206: Calculate a
path quantity #A
based on the CIR

1207: Determine,
based on the path
quantity #A and the
correspondence, to
adjust the AI model
#1 to an AI model #2

1208: Path quantity #A or request
information used to request the AI
model #2

1209: Adjust the AI
model #3 to an AI
model #4, and perform
direct positioning by
using the AI model #4

1210: Fourth indication information

1211: Perform
assisted positioning
by using the AI
model #2

FIG. 12

1300

| A first network element receives a reference signal | 1310 |

The first network element performs channel measurement based on the reference signal to obtain a channel measurement result, where the channel measurement result is an input of a first AI model used for positioning, output precision of the first AI model, a preset threshold, and a correspondence are used to determine whether to switch or update the first AI model, and the correspondence includes a correspondence between complexity of an AI model used for positioning and the AI model used for positioning — 1320

FIG. 13

1400

First network element

Second network element

1401: Perform channel measurement based on a reference signal to obtain a CIR

1402: Input the CIR into an AI model #1 to perform LOS identification or assisted positioning

Model library

1403: Sixth indication information and/or correspondence

1404: Monitor an output of a first AI model

1405: Determine, based on output precision of the first AI model, a preset threshold, and the correspondence, to adjust the first AI model to a second AI model

1406: Output of the first AI model or request information used to request the second AI model

1407: Second AI model

1408: Perform LOS identification or assisted positioning by using the second AI model

FIG. 14

1500

Transceiver unit 1510

Processing unit 1520

FIG. 15

1600

Processor 1610

Transceiver 1630

Memory 1620

FIG. 16

Chip system 1700

Logic circuit 1710

Input/Output
interface 1720

FIG. 17

## INTERNATIONAL SEARCH REPORT

| International application No. |
| --- |
| **PCT/CN2023/128943** |

| **A.** | **CLASSIFICATION OF SUBJECT MATTER** |
| --- | --- |

H04W 4/02(2018.01)i;  H04W64/00(2009.01)i

According to International Patent Classification (IPC) or to both national classification and IPC

| **B.** | **FIELDS SEARCHED** |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, VEN, ENTXT, ENTXTC, 3GPP: 定位, 位置, 信道, 测量, 人工智能, 机器学习, 深度学习, 强化学习, 神经网络, 决策树, 支持向量机, 线性回归, 贝叶斯网络, Q学习, 切换, 更新, 更换, 调整, 转换, 转变, locat+, channel, measur+, AI, artificial 1w intelligen+, machine 1w learn+, ML , deep 1w learn+, reinforcement 1w learn+, neural 1w network, decision 1w tree, support 1w vector 1w machine, SVM , linear 1w regression, bayesian 1w network, Q 1w learn, switch+, updat+, replac+, adjust+, convert +, transit+

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| X | US 2022046385 A1 (QUALCOMM INC.) 10 February 2022 (2022-02-10) description, paragraphs 235-239 | 1-4, 6-15, 18-23, 42-48 |
| X | US 2022046386 A1 (QUALCOMM INC.) 10 February 2022 (2022-02-10) description, paragraphs 231-234 | 1-4, 6-15, 18-23, 42-48 |
| Y | US 2022046385 A1 (QUALCOMM INC.) 10 February 2022 (2022-02-10) description, paragraphs 235-239 | 28-41, 42-47, 49 |
| Y | US 2022046386 A1 (QUALCOMM INC.) 10 February 2022 (2022-02-10) description, paragraphs 231-234 | 28-41, 42-47, 49 |
| Y | US 2018053091 A1 (HAWXEYE INC.) 22 February 2018 (2018-02-22) claim 9 | 28-41, 42-47, 49 |
| A | CN 115243312 A (HUAWEI TECHNOLOGIES CO., LTD.) 25 October 2022 (2022-10-25) entire document | 1-49 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 December 2023** | **21 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/128943**

### C. DOCUMENTS CONSIDERED TO BE RELEVANT

| Category* | Citation of document, with indication, where appropriate, of the relevant passages | Relevant to claim No. |
|---|---|---|
| A | WO 2021242166 A1 (TELEFONAKTIEBOLAGET LM ERICSSON (PUBL)) 02 December 2021 (2021-12-02)<br>entire document | 1-49 |
| A | WO 2022139645 A1 (TELEFONAKTIEBOLAGET LM ERICSSON (PUBL)) 30 June 2022 (2022-06-30)<br>entire document | 1-49 |

Form PCT/ISA/210 (second sheet) (July 2022)

**INTERNATIONAL SEARCH REPORT**
Information on patent family members

International application No.

**PCT/CN2023/128943**

| Patent document cited in search report | | | Publication date (day/month/year) | Patent family member(s) | | | Publication date (day/month/year) |
|---|---|---|---|---|---|---|---|
| US | 2022046385 | A1 | 10 February 2022 | US | 11812338 | B2 | 07 November 2023 |
| | | | | WO | 2022031673 | A1 | 10 February 2022 |
| | | | | BR | 112023001361 | A2 | 14 February 2023 |
| | | | | EP | 4193165 | A1 | 14 June 2023 |
| | | | | KR | 20230044410 | A | 04 April 2023 |
| | | | | IN | 202247073041 | A | 06 January 2023 |
| | | | | CN | 116057402 | A | 02 May 2023 |
| | | | | VN | 94939 | A | 25 May 2023 |
| US | 2022046386 | A1 | 10 February 2022 | BR | 112023001262 | A2 | 14 February 2023 |
| | | | | JP | 2023537254 | A | 31 August 2023 |
| | | | | KR | 20230047368 | A | 07 April 2023 |
| | | | | EP | 4193171 | A1 | 14 June 2023 |
| | | | | WO | 2022031687 | A1 | 10 February 2022 |
| | | | | IN | 202247072693 | A | 06 January 2023 |
| | | | | CN | 116113841 | A | 12 May 2023 |
| | | | | VN | 94938 | A | 25 May 2023 |
| US | 2018053091 | A1 | 22 February 2018 | None | | | |
| CN | 115243312 | A | 25 October 2022 | WO | 2022222772 | A1 | 27 October 2022 |
| WO | 2021242166 | A1 | 02 December 2021 | US | 2023209586 | A1 | 29 June 2023 |
| | | | | EP | 4158939 | A1 | 05 April 2023 |
| | | | | EP | 4158939 | A4 | 29 November 2023 |
| WO | 2022139645 | A1 | 30 June 2022 | EP | 4267984 | A1 | 01 November 2023 |

Form PCT/ISA/210 (patent family annex) (July 2022)

**REFERENCES CITED IN THE DESCRIPTION**

**Patent documents cited in the description**

- CN 202211358886